# EUROPEAN PATENT APPLICATION

(11) **EP 4 687 363 A2**
(43) Date of publication of application: **04.02.2026**
(21) Application number: 25192803.2
(22) Date of filing: 30.07.2025
(51) Int. Cl.: H04W 36/00

(54) **SYSTEMS AND METHODS FOR IMPROVING QUALITY OF EXPERIENCE OF LOW LATENCY APPLICATIONS WHILE ROAMING IN A WIRELESS NETWORK**

(30) Priority: 31.07.2024 US 202418790722
(71) Applicant: Avago Technologies International Sales Pte. Limited, Singapore 768923 (SG)
(72) Inventor: SINHA, Santanu, Irvine, 92618 (US)
(74) Representative: Dilg, Haeusler, Schindelmann Patentanwaltsgesellschaft mbH

(57) **Abstract**

The disclosure describes systems (100, 300) and methods for improving quality of experience of low latency applications while roaming in a wireless network. One or more switches (305) can be coupled to a network to communicate with a plurality of access points (310). Each access point (310) can be associated with a plurality of client devices. A switch (305) can receive feedback messages from each access point (310) connected to a corresponding port of the switch. The feedback messages can include telemetry information on each client device connected to each access point (310). A controller (345) can determine, based at least on the telemetry information, whether to initiate roaming of the client device from one access point (310) connected to one switch (305) to another access point (310) connected to a different switch (305). The controller (345) can initiate a transfer of connection of client device from one access point (310) to another access point (310) in response to initiating roaming of the client device.

## Description

### FIELD OF THE DISCLOSURE

This disclosure generally relates to systems and methods for wireless communication between access points and wireless communication devices, including, without limitation, improving quality of experience of low latency applications while roaming in a wireless network.

### BACKGROUND

Modern digital environments are increasingly populated with devices that rely on low latency applications such as online gaming, video conferencing, and real-time data analysis, which require fast and reliable data transfer. Network infrastructure across various sectors, including enterprise, small and medium businesses, retail, education, and homes, utilizes a combination of wired and wireless technologies to meet these demands. The network infrastructure can include switches that facilitate communication and data transfer between network components, while access points provide wireless connectivity to devices.

### SUMMARY

The technical solutions of the present disclosure are directed to improving the quality of experience of low latency applications in a wireless network responsive to a client device (which can also be referred to interchangeably as a client in the present disclosure) roaming between access points. Wireless networks support a wide range of applications, from web browsing to intensive real-time communication and entertainment such as audio/video conferencing and online gaming. These applications demand not only efficient data transmission but also quick delivery of data packets to provide seamless user experiences. Applications sensitive to latency can experience significant degradation in the user experience due to delays in data transmission. Modern wireless networks rely on a complex interplay between access points and wireless controllers (WCs) or a gateway to deliver seamless connectivity for users. The WC can manage client devices, often moving them between access points based on factors such as signal strength and traffic load balancing. However, this process of client roaming can introduce technical challenges that may hinder network performance and the user experience. For example, a primary issue can arise when the signal strength between an access point and a client device weakens. While the WC can initiate roaming to a different access point with a stronger signal, data packets continue to arrive at the initial access point destined for the client device. This can create a situation where downstream traffic (data flowing from the network to the client) accumulates at the initial access point even though the departing client device's reception rate has significantly dropped.

During roaming, if another client device experiences improved signal strength near the initial access point, the switch connected to that access point lacks the capability to prioritize its traffic over the already accumulated data packets for the departing client device. This is because switch functionalities focus on wired network management and do not dynamically adjust traffic priority based on real-time wireless signal fluctuations. As a result, the network can miss opportunities to improve data delivery for client devices with better reception conditions. In some cases, when the WC initiates a handoff, causing the client device to connect to a different access point with a stronger signal, the status of packets waiting at the access point the client device left remains uncertain. Depending on the protocol used (e.g., TCP or UDP), these packets can be purged or dropped. The purged TCP packets can trigger re-transmission from the sender (or server), leading to wasted bandwidth and increased latency. The lost UDP packets are not recovered or re-transmitted, leading to poor quality of experience such as choppy video playback or audio glitches. These challenges can be important for low latency applications, which use TCP and UDP protocols for data transfer, making them vulnerable to packet loss and re-transmissions during roaming.

The technical solutions disclosed herein can overcome these challenges of packet loss and traffic accumulation at the access points during client roaming, particularly for low latency applications, by implementing a hierarchical scheduler within each switch interface connected to an access point. The hierarchical scheduler can include a port scheduler and a client scheduler. For instance, the hierarchical scheduler can include a port scheduler (or a port level scheduler) for the port that is connected to an access point. A port can refer to a logical connection point or a physical interface that allows devices to connect to the switch. The port scheduler can aggregate the downstream traffic destined for client devices associated with the connected access point. Each client device can be associated with a client scheduler that can manage the downstream traffic for each individual client device. The client scheduler can prioritize packets based on various priority levels and store the prioritized packets in queues within the switch's packet buffer memory.

The switch can be equipped with sufficient packet buffer memory to store packets temporarily, especially when a client device processes data slower than the rate of incoming network traffic. The hierarchical scheduler can dynamically adjust the traffic rate for individual client devices based on the signal strength reported by the access points. For instance, the switch can use feedback messages (e.g., sent periodically by access points) to adjust traffic rates for client devices based on signal strength. If a client device experiences poorer signal strength, the switch can reduce the traffic rate to that client device, resulting in less traffic accumulation at the access point. However, if another client device experiences a stronger signal, the switch can increase the traffic rate to the maximum allowed by the network for that client device, providing timely delivery to the access point. This rate shaping can regulate the traffic such that access points receive traffic at a rate they can efficiently transmit, minimizing accumulation in their local memory. These adjustments can deliver traffic more efficiently, enhancing the use of the air medium. If the feedback messages are generated and processed by hardware at the access point and the switch, respectively, the rate of adaptation to changing conditions can be the fastest. The dynamic adjustment process can address network issues effectively, achieving higher network utilization and a better user experience through a higher rate of adaptation in the feedback mechanisms.

During client device roaming, the client scheduler associated with the departing access point (for example, connected to one switch) can identify packets that belong to the roaming client device and transfer these packets to the corresponding client scheduler associated with the new access point (for example, connected to a different switch). The switch can redirect any residual packets accumulated for the roaming client at the departing access point to the new access point, minimizing packet loss. This transfer of packets can occur through the same switch or different switches within the network. The one or more access points connected to different switches can be controlled by one or more controllers over the network. If the new access point is directly connected to the old access point (or departing access point), the redirection of packets can involve associating the client queues to a different port in the same switch. If the new access point is connected to the same switch, the redirection of packets can involve associating the client queues to a different port in the same switch. However, if the new access point is connected to a switch in a stack or in a local area network (LAN), the redirection of packets can involve tunneling the packets. This redirection of client packets after a client has roamed can achieve higher network utilization (including wide area network (WAN) bandwidth) and a better user experience. For packet movement, switches and access points can use the same client identification method, such as the MAC address. By implementing the hierarchical scheduler with client roaming support, the technical solutions can minimize packet loss by managing queues and facilitating seamless packet delivery during roaming.

At least one aspect of the technical solutions is directed to a method of improving quality of experience of low latency applications while roaming in a wireless network. The method can include receiving, by a controller of a switch, feedback messages from each access point of a plurality of access points. Each access point can be connected to a corresponding port of a plurality of ports of a switch. The feedback messages can include telemetry information on each client of the one or more clients connected to each access point. The method can include determining, by the controller, based at least on the telemetry information, to initiate roaming of a client of the one or more clients from a first access point of the plurality of access points to a second access point of the plurality of access points. The method can include initiating, by the controller, a transfer of the connection of the client with the first access point to the second access point. The transfer can include transferring of data stored on the first access point for the client to the second access point.

The telemetry data of the feedback messages can include at least one of radio signal strength indicator (RSSI) or signal to noise ratio. In some embodiments, the method can further include determining, by the controller, to initiate the roaming of the client responsive to one of the RSSI or signal to noise ratio falling below a threshold. In some embodiments, the method can further include initiating the transfer by communicating one or more instructions to one or more of the clients, the first access point or the second access point. In some embodiments, the method can further include transferring, by the switch, packets being stored by the switch at a first port buffer of a first port for the client associated with the first access point to a second port buffer of a second port, of the switch or a second switch, assigned to the second access point. The transfer of the connection can include transferring of the client's credentials. In some embodiments, the method can further include adjusting, by the switch, traffic rates based at least on the telemetry information.

Another aspect of the technical solutions is directed to a system of improving quality of experience of low latency applications while roaming in a wireless network. The system can include a switch in communication with a plurality of access points. Each access point of the plurality of access points can have a connection to one or more clients. The system can include a controller of the switch configured to: receive feedback messages from each access point, of the plurality of access points, where each access point is connected to a corresponding port of a plurality of ports of the switch, the feedback messages including telemetry information on each client of the one or more clients connected to each access point; determine, based at least on the telemetry information, to initiate roaming of a client of the one or more clients from a first access point of the plurality of access points to a second access point of the plurality of access points; and initiate a transfer of the connection of the client with the first access point to the second access point. The transfer can include transferring of data stored on the first access point for the client to the second access point. The telemetry data of the feedback messages can include at least one of radio signal strength indicator (RSSI) or signal to noise ratio.

In some embodiments, the controller can be further configured to initiate the roaming of the client responsive to one of the RSSI or signal to noise ratio falling below a threshold. In some embodiments, the controller can be further configured to initiate the transfer by communicating one or more instructions to one or more of the client, the first access point or the second access point. In some embodiments, the switch can be further configured to transfer packets being stored by the switch at a first port buffer of a first port for the client associated with the first access point to a second port buffer of a second port, of the switch or a second switch, assigned to the second access point. The transfer of the connection can include transferring of the client's credentials. In some embodiments, the controller can be further configured to adjust traffic rates based at least on the telemetry information.

Yet another aspect of the technical solutions is directed to a system of improving quality of experience of low latency applications while roaming in a wireless network. The system can include one or more switches coupled to a network to communicate with a plurality of access points, and each of the plurality of access points can be associated with a plurality of clients. Each switch of the one or more switches can include a plurality of ports, and each port of the plurality of ports can be connected to an access point of the plurality of access points. Each port of the plurality of ports can include a port scheduler to aggregate packets received by the switch from the network for the plurality of clients associated with the access point. The switch can include a client scheduler for each client of the plurality of clients associated with the access point of each port. Each client scheduler can schedule the packets aggregated by the port scheduler for a client of the plurality of clients of the access point based at least on one or more priority levels. In some embodiments, each client scheduler can be configured to adjust a rate of transmission of scheduled packets to the client of the plurality of clients based at least on the one or more priority levels and telemetry data from one or more feedback messages received from the access point.

Each port scheduler can be further configured to select each client scheduler based at least on a selection from one or more scheduling algorithms. In some embodiments, the one or more switches can be further configured to store aggregated packets in a packet buffer memory, where each client scheduler can store one or more scheduled packets from the packet buffer memory in a priority queue for storing packets with a priority level of the one or more priority levels. In some embodiments, the one or more switches can be further configured to receive the one or more feedback messages from each access point the switch is connected to, where the one or more telemetry data of the one or more feedback messages can include at least one of radio signal strength indicator (RSSI) or signal to noise ratio. In some embodiments, the one or more feedback messages can identify the client using a machine access control (MAC) address of the client and identify the MAC address of the access point as a source address and the MAC address of a switch of the one or more switches as a destination address.

In some embodiments, the switch can be further configured via one of the port scheduler or the client scheduler to reduce the rate of transmission of scheduled packets to the client responsive to one of the radio signal strength indicator or signal to noise ratio of the client's connection to the access point falling below a threshold. In some embodiments, the switch can be further configured via one of the port scheduler or the client scheduler to prioritize packets of one or more clients having a radio signal strength indicator or signal to noise ratio with the access point above a threshold. In some embodiments, a switch of the one or more switches can be further configured to, responsive to the client switching from the access point to a second access point connected to one of the switch or a second switch of the one or more switches at a second port, transfer packets in one or more queues of the client to one or more second queues of a second client scheduler for the second access point connected to the second port.

### BRIEF DESCRIPTION OF THE DRAWINGS

The foregoing and other objects, aspects, features, and advantages of the disclosure will become more apparent and better understood by referring to the following description taken in conjunction with the accompanying drawings, in which:
FIG. 1A illustrates a general schematic block diagram of a communication system, in accordance with one or more embodiments;
FIG. 1B illustrates a general schematic block diagram of a portion of the communication system illustrated in FIG. 1A, in accordance with one or more embodiments;
FIG. 1C illustrates a general schematic block diagram of applications in communication with cloud infrastructure for the communication system illustrated in FIG. 1A, in accordance with one or more embodiments;
FIG. 1D illustrates a general schematic block diagram of an application for a communication system illustrated in FIG. 1A, in accordance with one or more embodiments;
FIG. 1E illustrates a general schematic block diagram of an application for a communication system illustrated in FIG. 1A, in accordance with one or more embodiments;
FIG. 1F illustrates a schematic block diagram of the communication system illustrated in FIG. 1A, including a server configured for augmented reality/virtual reality, and/or metaverse applications, in accordance with one or more embodiments;
FIG. 2A illustrates a block diagram of embodiments of a computing device, in accordance with one or more embodiments;
FIG. 2B illustrates a block diagram depicting a computing environment comprising a client device in communication with cloud service providers, in accordance with one or more embodiments;
FIG. 3 illustrates a block diagram of an example system for improving quality of experience of low latency applications while roaming in a wireless network, in accordance with one or more embodiments; and
FIG. 4 illustrates an example flow diagram of a method for improving quality of experience of low latency applications while roaming in a wireless network, in accordance with one or more embodiments.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: IEEE 802.11^{™}, IEEE 802.14^{™}, IEEE P802.3^{™} and IEEE Ethernet standard systems including but not limited to LRM, VSR, SR, MR, LR, ZR and KR. Although this disclosure may reference aspects of these standard(s), the disclosure is in no way limited by these standard(s).

Devices provided by ISPs and customer-owned AR/VR setups, mobile phones, OTT devices, and cloud gaming clients are configured for low latency uses in some embodiments. Some embodiments of systems and methods disclosed herein provide a real time or near real time system to monitor end to end latencies. In some applications, timestamp synchronization with applications at intermediate nodes and end devices use precision time protocol (PTP) synchronization protocols for latency monitoring. In some embodiments, latency is monitored from end-to-end so that latency of all devices within the entire end-to-end process is considered, thereby enabling identification of the origins of substantial latency.

In some embodiments, the systems and methods achieve synchronization of a time reference across all nodes and end-user devices by employing timestamps for low latency data packets at each node. The determination of latency at each node is made by applications at each node. The determination of latency is reported back to a server that communicates with the applications. The systems and methods allow the communication system to distinguish whether latency arises from the home network, an ISP, or cloud servers.

A latency application server extension is integrated into the ISP-provided modem or router in some embodiments. In some embodiments, the server extensions have the ability to filter and transmit all necessary information to the ISP's cloud server or share open data with application developers. The server extension can store or receive information about a customer's low latency plan subscription and can track low latency usages inside the home in some embodiments.

A server extension can refer to a software component or module that extends the functionality of a server application (e.g., a latency application) in some embodiments. Server extensions can be used in various server environments such as web servers, application servers, ISP servers, and database servers to enhance their capabilities or to add specific features tailored to the needs of users or applications and can be installed using extension files. The extensions can be installed on any of the devices discussed herein. In some embodiments, the extensions are provided on an ISP controlled server in the cloud, an ISP controlled modem or access point, a third party Wi-Fi access point, a third party modem, or ISP provided low latency devices.

In some embodiments, the server extension allows a user to select device applications for different latency treatment. A server within the residence can use classifiers and queues to reduce latency for low latency devices. The server can be part of a router, set top box, hub, etc. in some embodiments. The server extensions support multiparty involvement (e.g., cloud managers, ISPs, application developers and silicon vendors) for end to end usages in some embodiments.

With respect to latency, generally, latency refers to an amount of time a system, application or device takes to process and respond to a request in some embodiments. With respect to low latency, low latency refers to such amount of time being within a threshold, a performance level, a user experience level or requirements of the application or usage in some embodiments. The threshold, performance level, user experience level or requirements of the application may vary based on context, such as a type of application and/or use case and the systems, networks, and computer environment for which such use cases and/or application operate or execute. Low latency from a perspective of a computing environment refers to an ability of a computing system or network to provide responses without unacceptable or unsuitable delay, or otherwise minimal delay, for the context or use case of which such responses are provided. System criteria and application parameters can affect a threshold for low latency. The threshold can be fixed or variable (e.g., depending upon conditions or actual needs or requirements at a particular time). With respect to low latency networks and systems in a context of network and network communication, low latency describes a computer network, systems and environment that is designed, configured and/or implemented to support applications, network traffic and processing operations to reduce, improve latency or to meet a low latency threshold. End-to-end latency refers to latency between two points in a network or communication system. The two points can be a source of data and a consumer of data, or intermediate points therebetween in some embodiments.

A low latency device refers to any hardware, device component, or system that has low latency considerations or requirements in some embodiments. A low latency device can be, for instance, a telecommunications, remote control systems, gaming, audio processing, financial trading, augmented reality and/or virtual reality device where delays can impact user experience or system performance. There may be levels of low latency requirements where one low latency device has a more stringent requirement than another low latency device in some embodiments. A low latency path refers to a path for low latency operation in some embodiments. Latency data refers to any indication of latency associated with a communication or configuration data for low latency operation or control in some embodiments. A low latency application refers to the use or performance of a low latency operation in some embodiments. A low latency device or software program can be used to perform the low latency operation (such as video conferencing, cloud gaming, augmented reality/virtual reality (AR/VR) applications, and metaverse applications).

Some embodiments relate to a system including a first device and an application. The application operates on the first device and is configured to append time stamps to a first packet received by the first device. The time stamps indicate a first time the first packet is received by the first device and a second time the first packet is sent by the first device. Append refers to adding or attaching information to a data structure (e.g., a packet) in some embodiments.

In some embodiments, the application is configured to determine latency information associated with communication through the first device using the time stamps. The time stamps include a first time stamp for the first time and a second time stamp for the second time. In some embodiments, the application is configured to provide a second packet including the latency information and communicate the second packet to a server remote from the first device via a virtual communication link. In some embodiments, the first time stamp is an ingress time stamp and the second time stamp is an egress time stamp.

In some embodiments, the time stamps are provided as part of a precision time protocol. In some embodiments, the first packet is for use in a low latency operation. In some embodiments, the time stamps are derived from a satellite time source. In some embodiments, the latency information includes a history of time stamps. In some embodiments, the first device is a user device, cloud infrastructure, internet service provider infrastructure, a set top box, a cable modem, or a wireless router.

Some embodiments relate to a non-transitory computer readable medium having instructions stored thereon that, when executed by a processor, cause a processor to receive a first packet from a first node. The first packet includes latency information associated with a second packet provided to the first node for a low latency application. The instructions also cause the processor to provide a third packet to the first node or other nodes to increase priority for packets for the low latency application if the latency information indicates that a latency threshold for the low latency application has not been met. The first node can be part of a communication system including a cable, fiber optic, or wireless network. The other nodes and the first node are in path associated with the second packet provided to the first node for the low latency application.

In some embodiments, the processor is disposed on a server remote from the first node. In some embodiments, the server is in communication with internet service provider infrastructure and the third packet is provided to the internet service provider infrastructure. In some embodiments, the third packet is provided to internet service provider infrastructure, a set top box, a cable modem, or a wireless router.

In some embodiments, the instructions cause the processor to provide a fourth packet or data unit (e.g., network layer packets, cells, frames, etc., used in the transmission of data) to the first node or the other nodes to decrease priority for packets for the low latency application if the latency information indicates that the latency threshold for the low latency application has been met and additional bandwidth is available.

In some embodiments, the latency information comprises a user identification.

Some embodiments relate to a method of providing low latency service. The method includes providing a first time stamp for a first packet provided to a first device. The first packet can be for reception by a low latency device or as being for use in a low latency operation. The method also includes providing a second packet including latency information to a server remote from the first device via a virtual communication link.

In some embodiments, the method also includes providing a second time stamp for the first packet provided to the first device. In some embodiments, the first time stamp is an ingress time stamp and the second time stamp is an egress time stamp. In some embodiments, the first device includes an application configured to append the first time stamp to the first packet.

Some embodiments relate to a server. The server includes a first application configured to monitor end-to-end latency for a network. The network includes devices. The application is configured to receive latency information from at least one of the devices. The latency information includes time stamps or time period data for a packet to communicate across a device or a link. Monitoring or monitor refers to an action where performance is observed, checked, and/or recorded and can generally occur over a period of time.

A non-transitory computer readable medium has instructions stored thereon that, when executed by a processor, cause the processor to receive a first packet from a first node. The first packet includes latency information associated with a second packet provided to the first node for a low latency application. The instructions also cause the processor to provide a subscription offer in response to the latency information. The first node is part of a communication system comprising a cable, fiber optic, or wireless network. The other nodes and the first node are in paths associated with the second packet provided to the first node for the low latency application.

In some embodiments, the first device is a set top box, a cable modem, or a wireless router. A device can refer to any apparatus, system, or component for performing an operation in some embodiments. A low latency device can refer to any device capable of performing a low latency operation. A low latency operation refers to an operation where higher than low latency operation can affect performance level, user experience level, or a requirement of the application or use in some embodiments. A packet refers to a unit of data that is transmitted over a network in some embodiments, and includes cells, frames, and network layer packets, for instance. The packet can include a header and a payload. Time stamps and latency information can be appended to a packet in some embodiments. Classify or classifying may refer to any operation for determining a classification, grouping or arrangement in some embodiments. For example, a packet can be classified as being for a low latency device or application by reviewing an address, appended data, by its type of data, or other information in some embodiments. Bandwidth may refer to an amount of capacity for communication in some embodiments. Priority refers to a precedence, hierarchical order, level, or other classification in some embodiments. For example, packets can be ordered for transmission in accordance with a priority associated with a latency requirement in some embodiments. A cable, fiber optic, or wireless network refers to any network that uses one or more of a fiber optic cable, a coaxial cable, an ethernet cable, other wire, or wireless medium in some embodiments.

For purposes of reading the description of the various embodiments below, the following descriptions of the sections of the specification and their respective contents may be helpful:
- Section A describes a communication system that may be useful for practicing the embodiments described herein.
- Section B describes low latency applications that may be useful for practicing the embodiments described herein.
- Section C describes embodiments of network environments and computing environments that may be useful for practicing the embodiments described herein.
- Section D describes embodiments of systems and methods of improving the quality of experience of low latency applications while roaming in a wireless network.

### A. Communication System

Network latency can significantly impact internet connectivity, user experience, and the performance of various online applications and services. Some embodiments provide information for ISPs to address end-to-end latency issues through network optimization, infrastructure upgrades, and efficient routing to ensure a reliable and responsive internet experience for their customers. In some embodiments, tools are provided so that cloud servers of ISPs can collect analytics data and can re-configure ISP provided devices like cable modems, GPON modems or set top boxes. In some embodiments, the systems and methods allow multiple parties (e.g., more than one ISP, cloud service providers, public switch operators, and application developers) to address low latency usages including but not limited to video conferencing, augmented reality (AR)/ virtual reality (VR), and metaverse end to end usage. In some embodiments, the systems and methods allow multiple parties to cooperate and work together to address latency issues. In some embodiments, the systems and methods can be used with Wi-Fi networks, Ethernet networks, modems, access network, backbone networks, IXPs, and cloud infrastructure and allow multiple teams to work together for latency optimizations across various mediums.

In some embodiments, a latency monitor measures and reports latency for each link, device, and end application. The reports are provided to controllers of the paths, such as, ISPs, application developers, end users, etc. so that actions can be taken once low latency requirements are not met. In some embodiments, systems and methods provide a seamless latency monitoring, analysis, and optimization. The analysis of latency measurements and reporting allows for identification of latency contributors in real time and optimization by mapping traffic requiring low latency traffic to low latency queues or paths. In some embodiments, devices in the path are provided with an application (e.g., software) for effecting monitoring, analysis, and optimization. The analysis of latency measurements and reporting allows for control of devices to appropriately provide low latency traffic to low latency queues or paths. The applications can be in communication with a latency server (e.g., a server for the applications) that coordinates operations and accumulates data according to the monitoring, analysis, and optimization operations. An application or app may refer to a software program or module configured to perform specific functions or tasks on an electronic device.

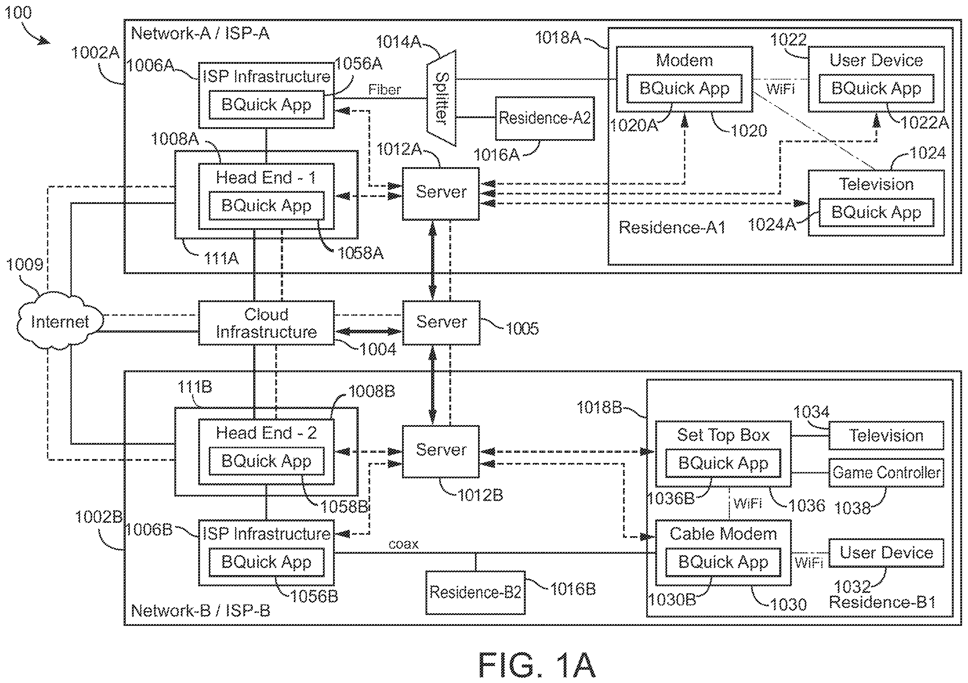

With reference to FIG. 1A, a communication system 100 includes a network 1002A for residences 1016A and 1018A, a network 1002B for residences 1016B and 1018B, a cloud infrastructure 1004, and a BQUICK_TOP server 1005. Communication system 100 advantageously is configured so that information is provided to ISPs to address latency issues through network optimization, infrastructure upgrades, service upgrades and/or efficient routing to ensure a reliable and responsive internet experience for customers can be achieved on networks 1002A and 1002B. BQUICK_TOP server 1005 is configured to receive the information and address latency issues in some embodiments. BQUICK_TOP server 1005 is in communication (e.g., via direct or virtual connections) with cloud infrastructure 1004 and networks 1002A and B (residences 1016A-B and 1018A-B) to share information, reports, commands, and other data in some embodiments. BQUICK_TOP server 1005, infrastructure 1004 and residences 1016A-B and 1018A-B can utilize any form of communication mediums, networks, protocols, etc. to communicate data and information.

Cloud infrastructure 1004 includes a collection of hardware, software, networking, and other resources that enable the delivery of cloud computing services over the internet in some embodiments. Cloud infrastructure 1004 includes physical servers, storage devices, networking equipment, and other hardware components hosted in data centers distributed across multiple geographic locations in some embodiments. The data centers are equipped with high-performance servers, storage arrays, and networking gear to support the computing needs of cloud services in some embodiments. The cloud infrastructure 1004 is configured to provide high-speed, redundant network links, routers, switches, and content delivery networks (CDNs) for delivery of low-latency, high-bandwidth content for users in some embodiments. Cloud infrastructure 1004 includes block storage (e.g., Amazon EBS, Azure Disk Storage), object storage (e.g., Amazon S3, Google Cloud Storage), and file storage (e.g., Amazon EFS, Azure Files) in some embodiments.

Residences 1016A and 1018A can include a network associated with a first ISP and residences 1016B and 1018B can include a network associated with the same ISP or a second ISP. In some embodiments, the networks for residences 1016A and 1018A and residences 1016B and 1018B are part of broadband access server (BAS) networks. Network 1002A includes infrastructure 1006A, a head end 1008A, a BQUICK ISP_A server 1012A, splitter 1014A, equipment for residence 1016A and equipment for residence 1018A. Equipment for residence 1018A includes an optical network unit (ONU) 1020, a user device 1022, and a television 1024. Modem or optical network unit 1020 can be a fiber optic router, switch, gateway, etc. and have Wi-Fi capabilities for a Wi-Fi network associated with residence 1018A in some embodiments. Optical network unit 1020 is a GPON modem or optical network terminal (ONT) in some embodiments. GPON is a technology that allows for high-speed internet access over fiber optic cables. Optical network unit 1020 converts the optical signals transmitted over the fiber optic cables into electrical signals and/or radio frequency signals that can be used by devices in residence 1018A. Although system 100 is shown communicating via coaxial cable and optical cable, ground based wireless communications and satellite communications can be utilized in system 100. Optical network unit 1020 is generally provided by an optical network operator (ISP-A) and can be referred to as an optical network termination. BQUICK_TOP server 1005 and BQUICK ISP_A server 1012A can be Broadcom Analytics System (BAS Servers) that collect analytics data from various devices like modems, set top boxes, and other devices.

User device 1022 is a smartphone, AR/VR device, tablet, laptop computer, smartwatch, exercise equipment, smart appliance, camera, headphone, automobile, other computing device, etc. Residence 1016A can have similar devices to residence 1018A. Television 1024 and user device 1022 communicate with optical network unit 1020 via a wireless network or wired connections. In some embodiments, optical network unit 1020 can include an Ethernet router including wired connections to user device 1022, wireless modems, and television 1024.

Head end 1008A includes routers, switches, servers, and/or other infrastructure for communicating between ISP infrastructure 1006A and cloud infrastructure 1004. ISP infrastructure 1006A includes routers, switches, servers, and/or other infrastructure for communicating between head end 1008A and splitter 1014A. Splitter 1014A communicates via fiber optic cables between infrastructure 1006A and residences 1016A and 1018A., BQUICK ISP_A 1012A BQUICK_TOP server 1005 communicates with server 1012, infrastructure 1006A, head end 1008A and residences 1016A and 1018A via direct or indirect communication (e.g., via the Internet).

Splitter 1014A is a fiber optic splitter in some embodiments. Splitter 1014A can be used in fiber optic networks to divide an incoming optical signal into multiple separate signals for residences 1016A and 1018A and unify signals into one or more signals for infrastructure 1006A. Splitter 1014A can be configured for a passive optical network (PON) architecture. Bidirectional communication occurs across splitter 1014A in some embodiments. In some embodiments, splitter 1014A is a conducting cable-type splitter (e.g., for a coaxial, not optical cable). Splitter 1014A includes repeaters, amplifiers, signal conditioners, etc. in some embodiments.

BQUICK ISP_A server 1012A is a computing device, such as a machine equipped with one or more processors, memory, and storage drives. BQUICK ISP_A server 1012A delivers assorted services to customers (e.g., residences 1016A and 1018A) for the ISP in some embodiments. BQUICK_TOP server 1005 is configured as a central hub responsible for managing and routing internet traffic for its subscribers. BQUICK ISP_A server 1012A handles requests from users such as accessing websites, sending emails, streaming content, and downloading files. BQUICK ISP_A server 1012A manages network protocols, assigns IP addresses, and facilitates communication between different devices on the internet. BQUICK ISP_A server 1012A includes operating systems like Linux or Windows Server, along with networking software such as routing protocols (e.g., BGP, OSPF), a DNS (Domain Name System) server, a dynamic host configuration protocol (DHCP) server for IP address allocation, and firewall/ security software to protect system 100 from cyber threats. BQUICK ISP_A server 1012A employs traffic shaping and quality of service (QoS) mechanisms to prioritize and optimize internet traffic, ensuring a smooth and consistent user experience for all subscribers. These operations can involve managing bandwidth allocation, prioritizing certain types of traffic (e.g., VoIP or video streaming), and mitigating network congestion during peak usage periods and can be performed in response to information from server 1012. BQUICK ISP_A server 1012A employs monitoring tools or applications to continuously analyze traffic data to detect anomalies, troubleshoot network issues, and ensure compliance with service level agreements (SLAs) and regulatory requirements in some embodiments.

BQUICK_TOP server 1005 is a computing device similar to and is configured to communicate with servers 1012A and 1012B. BQUICK_TOP server 1005 includes software advantageously configured to address latency issues through network optimization, infrastructure upgrades, and efficient routing to ensure a reliable and responsive internet experience for their customers in some embodiments. BQUICK_TOP server 1005 can receive logs of network activity, including but not limited to traffic patterns, usage statistics, and security events from servers 1012A and 1012B in some embodiments. BQUICK_TOP server 1005 employs monitoring tools to continuously analyze traffic data to detect anomalies, troubleshoot network issues, and ensure compliance with service level agreements (SLAs) and regulatory requirements in some embodiments. In some embodiments, BQUICK_TOP server 1005 is a platform configured to perform latency monitoring in real time, latency analysis in real time, and latency optimization in real time. In some embodiments, the latency optimization is performed to provide a report indicating latency issues. BQUICK_TOP server 1005 can configure paths in networks 1002A and 1002B and controls devices in networks 1002A and 1002B so that low latency requirements are met in some embodiments.

BQUICK_TOP server 1005 and BQUICK ISP_B server 1012B are similar to BQUICK ISP_A server 1012A and can be configured to operate with residences 1016B and 1018B. Residences 1016A, 1018A, 1016B and 1018B are similar to each other and can include similar devices. Residence 1018B includes a cable modem 1030B, a set top box 1036B, a game controller 1038, a television 1034 and a user device 1032. User device 1032 is similar to user device 1022. Head end 1008B is similar to head end 1008A, and ISP infrastructure 106B is similar to ISP infrastructure 1006A. Televisions 1024 and 1034 are monitors, smart televisions, or other audio/video equipment. Networks 1002A and 1002B can include cameras, security equipment, fire and safety equipment, smart appliances, etc. in communication with infrastructure 1006A and 106B in some embodiments. ISP infrastructure 1006A and 106B can each include fiber optic cable, coaxial cable, remote nodes, splitters, and other equipment for cable customers in some embodiments. The equipment can include amplifiers, remote physical devices or layers and remote media access control devices or layers. Intermediate nodes in ISP infrastructure 1006A and 106B can process data packets and monitor latency and traffic at various points in network. BQUICK_TOP server 1005, BQUICK ISP_B server 1012B, BQUICK_ISP_A server 1012A are controlled by ISPs (e.g., respective ISPs) in some embodiments.

ISP infrastructure 106B is coupled to residences 1016B and 1018B via a coaxial cable in some embodiments. Cable modem 1030B is a device configured to connect devices in residence 1018B to the ISP infrastructure 106B. Cable modem 1030 includes a computer, router, gateway, or other communication device in some embodiments. Modem 1030 can be configured to provide a wireless network for communicating with devices in residence 1018B. Repeaters, amplifiers, signal conditioners, etc. can be provided on the cable associated with modem 1030 in some embodiments. Cable modem refers to any device for communicating across a cable in some embodiments. Optical network unit 1020 and modem 1030 provide data connection to the ISPs data pipe over fiber or cable. All devices inside the home can be connected to the modem over Wi-Fi or Ethernet, for instance, for internet connectivity. Each node (e.g., routers, repeaters, modems, Wi-Fi access points) inside the home can introduce latency. ONU 1020 and modem 1030 can be any device at a home or business that connects networking devices to ISPs via an internet data pipe over coaxial cable, fiber optic cable, digital subscriber line (DSL), or cell connection (e.g., via a tower (e.g., 5G, LTE modem)) in some embodiments.

Set top box 1036 is configured to receive and decode digital television, movie, streaming, or other video signals for viewing on television 1034. Set top box 1036 can be configured for gaming operations and can communicate with a game controller 1038. Set top box 1036 can also be configured to provide internet access, shopping services, home automation, audio features, screen mirroring, etc. Set top box 1036 includes one or more processors, memory, dedicated graphics processing units (GPUs), and/or storage capacity for storing games, applications (apps), latency data, and recorded content in some embodiments. Set top box refers to any device that connects to a television set or monitor and allows users to receive and decode video signals. A set top box can serve as an interface between a television set and various broadcast media sources, such as cable, satellite, or internet-based streaming services in some embodiments. A dashed line in the drawings can represent a virtual connection and a solid line can represent a physical connection (e.g., wires or fiber optic cable).

The cloud infrastructure 1004, head end 1008A, and head end 1008B are in communication with the internet 1009 virtually or directly. Head end 1008A and head end 1008B can be associated with buildings 111A and 111B, respectively. Communication system 100 is generally an end to end combination of networking elements used for networking traffic from a home or business to internet 1009 (e.g., public internet) in some embodiments. In some embodiments, cloud infrastructure 1004 is a set multiple servers, switches, storage units. ISPs can have a pool of data centers/cloud servers co-located with head ends 1008A and 1008B or dedicated links to cloud infrastructure 1004 from head ends 1008A and 1008B and head end connections to the internet 1009.

Although cloud infrastructure 1004 is shown as single block, cloud servers, data servers can be collocated with ISP head ends 1008A and/or 1008B. The cloud servers can be at third party private facility and ISPs can have dedicated physical links or links via internet 1009. Depending on congestion and server processing capabilities, cloud infrastructure 1004 can be a source of latency. Cloud server processing elements can be upgraded to support latency monitor applications (e.g., BQUICK applications) or can configure devices to support low latency services in some embodiments. Head ends 1008A and 1008B can be a central facility (e.g., a central office. A head end refers to a facility where internet data or audio/video content is received, processed, and routed to end subscribers like residential or business owners in some embodiments. Head ends 1008A and 1008B can have multiple switching, routing, data metering, queuing, security elements, and/or other devices which can introduce the latencies. Head ends 1008A and 1008B can also host Cable Modem Termination Systems (CMTS) in a cable network, DSLAM (Digital Subscriber Line Access Multiplexor) in a DSL network, and OLT (Optical Line Terminal) in a fiber network.

Networks 1002A and 1002B are operated by ISP-A and ISP-B. ISPs extend their services to various residences or businesses within communities, cities, or specific regions. Networks 1002A and 1002B represent two distinct networks served by the same or different ISPs, which may be situated in the same neighborhood or entirely in different regions or countries. Homeowners or business proprietors seek out ISPs offering services in their local areas and subscribe to internet service accordingly.

### B. Applications

System 100 advantageously includes an ISP infrastructure BQUICK application 1056A for ISP infrastructure 1006A, a head end BQUICK application 1058A for head end 1008A, a modem BQUICK application 1020A for optical network unit 1020, a user device BQUICK application 1022A for user device 1022, and a television BQUICK application 1024A for television 1024. Applications 1056A, 1058A, 1020A, 1022A, and 1024A can be software apps or programs designed to perform specific tasks or provide particular functions as described herein (e.g., latency monitoring, latency analysis, and latency optimization and the communication and storage of data related thereto). Applications 1056A, 1058A, 1020A, 1022A, and 1024A can be provided on any electronic devices in communications system 100 including but not limited to servers, computers, smartphones, tablets, smart devices, appliances, cameras, security devices, vehicles, user devices, and other digital platforms. In some embodiments, applications 1056A, 1058A, 1020A, 1022A, and 1024A can be executed on Windows, macOS, iOS, Android, or other operating systems or can be web-based and accessible through internet browsers. In some embodiments, applications 1056A, 1058A, 1020A, 1022A, and 1024A can be cross-platform with an ability to be executed on multiple OS environments. Applications 1056A, 1058A, 1020A, 1022A, and 1024A can be installed from various sources such as app stores, software repositories, or directly from ISP's website. In some embodiments, applications 1056A, 1058A, 1020A, 1022A, and 1024A are configured to communicate with BQUICK__TOP server 1005 via a virtual connection. In some embodiments, applications 1056A, 1058A, 1020A, 1022A, and 1024A are configured to communicate with BQUICK_TOP server 1005 via BQUICK ISP_A server 1012A. Applications 1056A, 1058A, 1020A, 1022A, and 1024A can be updated through app stores or via automatic updates depending on device settings.

BQUICK applications 1056A, 1058A, 1020A, 1022A, and 1024A are configured to facilitate integration and communication with other services or platforms, sharing of data, collaboration, and/or access to additional functionalities seamlessly. Applications 1056A, 1058A, 1020A, 1022A, and 1024A allow optical network unit 1020, television 1024 and user device 1022 to monitor latency, store subscription information (e.g., classic bandwidth in Megabits per second (MPPS), monitor low latency bandwidth (MBPS), max jitter in milliseconds), and provide options for upgrading internet service. The latency information and subscription information can be tracked according to device, device type, user identification, application, residence identification, etc. in some embodiments. The latency information can be provided in a packet with a time stamp to BQUICK_TOP server 1005 in some embodiments. A user interface can be provided by applications 1056A, 1058A, 1020A, 1022A, and 1024A on optical network unit 1020, television 1024 and user device 1022 to upgrade or downgrade to a different level of service in light of latency information. The different level of service can be provided to latency server 150 and BQUICK_TOP server 1005, BQUICK ISP_A BQUICK server 1012A, or BQUICK ISP_B BQUICK server 1012B in some embodiments.

System 100 advantageously includes an ISP infrastructure BQUICK application 1056B for ISP infrastructure 106B, a head end BQUICK application 1058B associated with head end 1008B, a modem BQUICK application 1030B for modem 1030, and a set top box BQUICK application 1036B for set top box. Applications 1056B, 1058B, 1030B, and 1036B are similar to applications 1056A, 1058A, 1020A, 1022A, and 1024A. In some embodiments, when applications 1030B, 1036B, 1056A, 1056B, 1058B, 1058A, 1020A, 1022A, and 1024A are installed or associated devices join the network, the applications 1030B, 1036B, 1056A, 1056B, 1058B, 1058A, 1020A, 1022A, and 1024A register at server 1012 as being compliant for operations described herein. User device 1032, television 1034, and game controller 1038 can also include an application similar to BQUICK applications 1022A and 1024A.

In some embodiments, BQUICK applications 1030B, 1036B, 1056A, 1056B, 1058B, 1058A, 1020A, 1022A, and 1024A are latency applications and are configured to communicate data so that a topology report can be provided. The topology report identifies devices/networks from end-to-end. Latency requirements of each device is provided in the report (e.g., on a device by device, type of usage by type of usage, user ID by user ID, or application by application basis) in some embodiments. The report can be stored at server 1012 in some embodiments. The latency requirements across the topology can be used to shape traffic, prioritize flow, etc. In some embodiments, the report tracks which devices are offline so that bandwidth reserved for those devices can be used for another device in some embodiments. In some embodiments, the report tracks whether the device is not running a low latency (e.g., BQUICK) application and yet is online so that bandwidth reserved for that device can be used for other devices in some embodiments. Offline refers to a state where a device, system, or application is not actively communicating with other devices or accessing online resources in some embodiments. A device that is off or asleep is offline in some embodiments. A low latency application can be offline when the low latency application is not running in some embodiments.

In some embodiments, the low latency packets are marked so that applications 1030B, and 1036B, 1056A, 1056B, 1058B, 1058A, 1020A, 1022A, and 1024A can process the packets and flow as a low latency flow. In some embodiments, the end device (e.g., application 1024A) can send a command or request indicating that latency requirements are not being met and each application in the path (applications 1020A 1056A, and 1058A) can respond to that command to process the packets for that device at a higher priority or remove traffic from that path in some embodiments. Latency issues can be sourced from an AP, a mesh, a device, or a node. Tracking bit rates or latencies at each location allow solutions to be directed to the particular location of the latency issue.

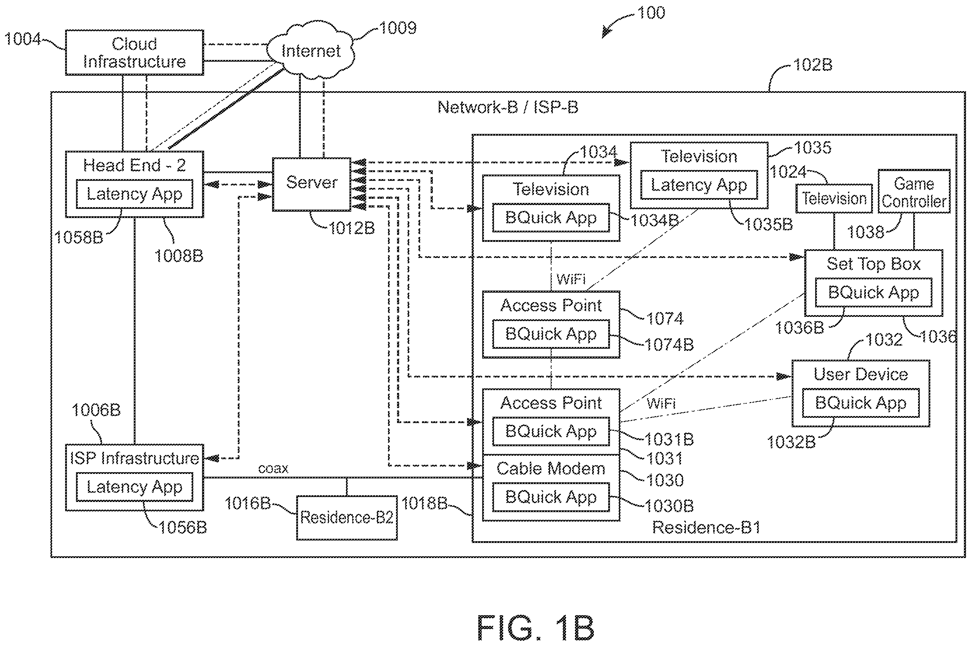

With reference to FIG. 1B, residence 1018B can include an access point 1031 in communication with modem 1030, a wireless router 1074 in communication with television 1034, a television 1035, set top box 1036, and user device 1032. Access point 1031 can be integrated with modem 1030 or can be a separate unit. User device 1032 includes a user device BQUICK application 1032B, and access point 1031 includes a latency access point application 1031B. Router 1074 includes a wireless router BQUICK application 1074B, television 1034 includes a television BQUICK application 1034B, and television 1035 includes a television BQUICK application 1035B. BQUICK_TOP server 1005, BQUICK_ ISP_A server 1012A, and BQUICK_ ISP_B server 1012B are in virtual communication with applications 1030B, 1031B, 1036B, 1074B 1032B, 1034B, 1035B, 1056B, and 1058B in some embodiments. A server refers to any computing device that provides services or resources to other computers or clients within a network in some embodiments.

Applications 1030B, 1031B, 1036B, 1074B, 1032B, 1034B, 1035B, 1056B, and 1058B are similar to applications 1056A, 1058A, 1020A, 1022A, and 1024A. Applications 1030B, 1031B, 1036B, 1074B, 1032B, 1034B, 1035B, 1056B, and 1058B allow modem 1030, televisions 1034 and 1035, access point 1031, router 1074, set top box 1036, and user device 1032 as well as other cable modem termination systems to monitor latency, store subscription information (e.g., classic bandwidth in Megabits per second (MPPS), low latency bandwidth (MBPS), max jitter in milliseconds), and provide options for upgrading internet service. A user interface can be provided on optical network unit 1020, television 1024 and user device 1022 to upgrade or downgrade to a different level of service in light of latency information. This ability is available even if the devices are third party devices in some embodiments. In some embodiments, application 1031B or 1074B can be configured to update network topology information to BQUICK_TOP server 1012, and applications 1030B, 1031B, 1036B, 1074B, 1032B, 1034B, 1035B, 1056B, and 1058B can monitor low latency resources, request services, register devices, and request different latency treatment (e.g., for video, audio, commands, downloads, etc.). In some embodiments, devices or nodes associated with applications 1030B, 1031B, 1036B, 1074B 1032B, 1034B, 1035B, 1056B, and 1058B can include algorithms for changing packet priority with time and latency requirements. Applications 1030B, 1031B, 1036B, 1074B, 1032B, 1034B, 1035B, 1056B, and 1058B can communicate using virtual or logical connections (e.g., using internet 1009).

Access point 1031 is a networking device that allows Wi-Fi-enabled devices to connect to a wired network. Access point 1031 serves as a bridge between wireless devices, such as wireless router 1074, set top box 1036, user device 1032, televisions 1034 and 1035, and the wired network infrastructure, such as, modem 1030, routers, switches, and servers, in some embodiments. Wireless router 1074 can be a networking device that provides a wireless access point for a wireless network. Wireless router 1074 serves as a hub for a wireless local area network (LAN), allowing multiple devices in or around residence 1018B to connect to the internet and communicate with each other. Wireless router 1074 can include wirelessly built-in Ethernet switches which provide multiple ports for connecting wired devices. A wired connection can connect router 1074 to access point 1031 or modem 1030 in some embodiments. Wireless router refers to any device that provides a wireless access point for a wireless network in some embodiments.

With reference to FIGS. 1B-1C, applications 1030B and 1032B are in communication with BQUICK_TOP server 1005 via a logical interface. The architecture of applications 1030B and 1032B can be used in any of applications 1031B, 1036B, 1074B 1034B, 1035B, 1056B, 1058B, 1056A, 1058A, 1020A, 1022A, and 1024A. The logical interface is a virtual interface that represents a specific network configuration or functionality within a networking device, such as modem 1030 or user device 1032. The logical interface is software defined and can be created, configured, and managed within the device's operating system in some embodiments. Applications 1030B and 1032B can be provided with modems, routers, access points, mesh devices, set top boxes, AR/VR devices, game consoles, phones, over the top devices (OTTs), etc. Applications 1030B, 1032B, and cloud infrastructure 1004 can communicate using app to app communication. App to app communication is an exchange of data, messages, or commands between two or more software applications running on the same device or different devices over a network in some embodiments. App to app communication enables integration and collaboration between different apps, allowing them to share information, trigger actions, or synchronize state without requiring user intervention in some embodiments. BQUICK_TOP server 1012 can include an application for monitoring and/or determining end to end latency.

In some embodiments, applications 1020A, 1024A, 1032B, 1034B, 1035B, 1036B, and 1032B are client level applications. Applications 1036B can be configured for highest priority (e.g., lowest latency applications) while ordinary streaming latencies are associated with applications 1020A, 1024A, 1032B, 1034B, 1035B, 1032B. Applications 137A and 1031B are node level application and can be configured to provide or assign priority for applications 1020A, 1024A, 1032B, 1034B, 1035B, 1036B, and 1032B (client level applications) and associated devices. Application 1030B can be configured to provide or assign priority between application 1036B, applications 137A and 1031B (e.g., node level applications), and applications 1020A, 1024A, 1032B, 1034B, 1035B, and 1032B (e.g., client level applications) as well as their associated devices. Cloud level applications can include applications 1056B and 1058B in some embodiments. In some embodiments, the partitioning of applications 1056B, 1058B, 1020A, 1024A, 1030B, 1032B, 1034B, 1035B, 1036B, 137A, and 1032B allows for segregation of local and cloud processing, reduction in cloud server communication and ISP bandwidth, local data storage and security, availability of local resources (including edge processing and filtering of information), and faster response to low latency devices. In some embodiments, application 1030B has a server extension and handles communication between server 1012 and applications 1020A, 1024A, 1032B, 1034B, 1035B, 1036B, and 1032B.

When application 1030B includes the server extension, application 1030B can be a client level application or a cloud level application and maintain a virtual connection to server 1012 in some embodiments. The server extensions can provide advantages of decoupling development from ISPs which can be helpful for standardization, of having a direct data path from application 1020A or 1031B to app developer servers, of maintaining local data privacy, of availability of local resources (e.g., local machine learning (ML), edge processing and filtering information), and of faster response to local low latency gadgets or devices in some embodiments.

In some embodiments, applications 1056B, 1058B, 1020A, 1024A, 1030B, 1032B, 1034B, 1035B, 1036B, 137A, and 1032B can achieve synchronization of the time reference across all nodes and end user devices. Applications 1056B, 1058B, 1020A, 1024A, 1030B, 1032B, 1034B, 1035B, 1036B, 137A, and 1032B utilize timestamps for low-latency data packets at each node. This enhancement enables the determination of latency at each node and reporting to server 1012 in some embodiments. By utilizing a precision time protocol (PTP), applications 1056B, 1058B, 1020A, 1024A, 1030B, 1032B, 1034B, 1035B, 1036B, 137A, and 1032B can distinguish whether latency arises from the home network, an ISP, or cloud servers using time stamps in some embodiments. Each device can have an associated PTP clock that communicates with the application associated with the device. The latency per node can be shared across networks so that networks can avoid devices having latency issues or can perform other operations to reduce latency at that node (e.g., divert higher latency traffic away from the node having issues). The PTP clock can be derived form a satellite clock in some embodiments.

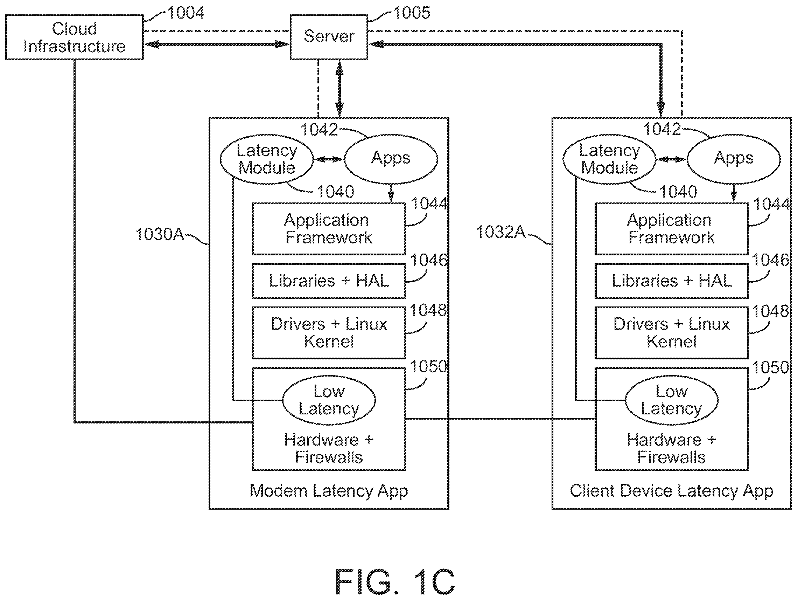

With reference to FIG. 1C, applications 1030B and 1032B each include a latency module 1040, applications 1042, an application framework 1044, libraries and hardware abstraction layer 1046, drivers and Linux kernel 1048, and hardware and firewalls 1050. In some embodiments, latency module 1040 is configured to control and monitor hardware and firewalls based upon latency. Latency module or BQUICK module 1040 is software configured to provide the low latency operations described herein. Applications 1042 are apps for performing various operations and can include third party apps (e.g., android package kit (APK)). Application framework 1044 is a structured set of software components that provide the necessary infrastructure for building and running applications.

Libraries and hardware abstraction layer 1046 provides standardized interfaces for device drivers to interact with hardware components. Libraries and hardware abstraction layer 1046 allows applications and system services to access hardware functionalities in a consistent manner across different devices. Libraries and hardware abstraction layer 1046 provide collections of pre-written code that developers can use to perform common tasks or implement specific functionalities and generally contain reusable functions, classes, or modules that provide specific capabilities.

Drivers and Linux kernel 1048 serves as the bridge between the hardware and the software layers of the system, managing system resources in some embodiments. Drivers and Linux kernel 1048 provide essential services and facilitate communication between software processes and hardware devices in some embodiments. Drivers and Linux kernel 1048 includes software components that facilitate communication between the operating system (OS) and hardware devices in some embodiments.

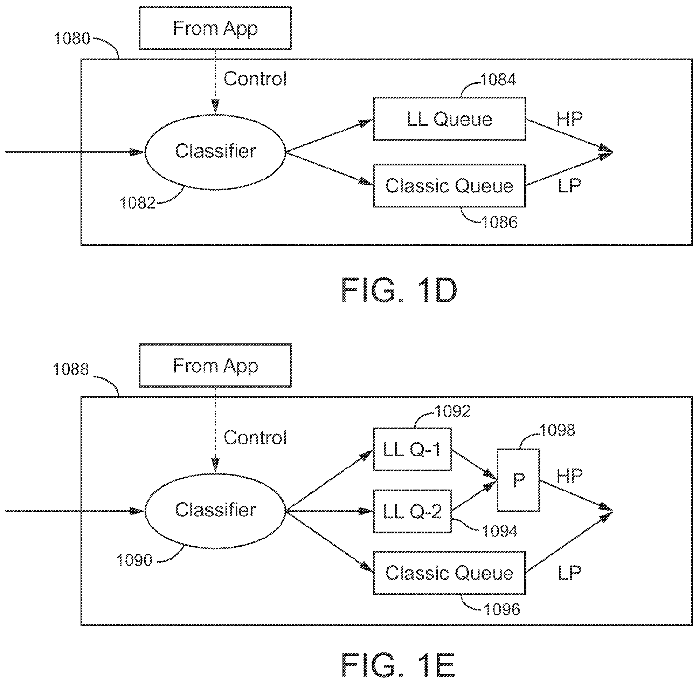

With reference to FIG. 1D, a function, service, process, or operation 1080 can be controlled by any of applications 1030B, 1031B, 1036B, 1074B, 1032B, 1034B, 1035B, 1056B, 1058B, 1056A, 1058A, 1020A, 1022A, and 1024A (FIGS. 1A and 1B). Operation 1080 use a classifier 1082, a low latency queue 1084, and a classic queue 1086. Queues 1084 and 1086 are memory or logical constructs (e.g., implemented using data structures) used to manage the flow of packets or messages within a network device or system 100 (FIG. 1A). Queue 1084 is associated with a high performance path, and queue 1086 is associated with a low performance path in some embodiments. A queue refers to any structure for storing information (e.g., packets) in some embodiments. Any networking device can have separate queue to support low latency traffic and operation can be performed any device in communication system 100 (FIG. 1A). Applications 1030B, 1031B, 1036B, 1074B, 1032B, 1034B, 1035B, 1056B, 1058B, 1056A, 1058A, 1020A, 1022A, and 1024A can report latency for each queue independently.

Queues 1084 and 1086 are configured as first-in-first-out (FIFO) buffers that temporarily hold packets or messages before messages are transmitted or processed in some embodiments. Queue 1084 can store messages for the high performance path (e.g., low latency path), and queue 1086 can store messages for the low performance path (e.g., high latency path) in some embodiments. In some embodiments, a low latency operations may use a low performance path, and a high latency operations may use the high performance path, or each uses the same path. A path refers to any communication route or channel through which data or information travels from a source to a destination (e.g., through devices and across mediums) in some embodiments. A path can include intermediate components and links involved in transmitting data between two or more points in one or more networks in some embodiments. A low latency path refers to a path for low latency traffic in some embodiments.

Classifier 1082 is processor and/or software configured to categorize or classify network traffic based on certain criteria (e.g., by latency requirements and/or priority). Classifier 1082 is configured to enforce network policies, prioritize traffic (e.g., for the high performance or low performance path), and/or apply specific actions based on the classification results in some embodiments. Classifier 1082 is used to differentiate between different classes of traffic (e.g., voice, video, data) and apply QoS policies to ensure that critical applications receive adequate bandwidth and latency requirements. Classifier 1082 prioritizes traffic based on predefined criteria, ensuring that important or time-sensitive applications receive preferential treatment over less critical traffic by appropriately providing traffic to queue 1084 and queue 1086. Classifier 1082 can utilize information about customer subscriptions (e.g., device level, user level, residence level) to classify traffic in some embodiments.

With reference to FIG. 1E, an operation 1088 can be controlled by any of applications 1030B, 1031B, 1036B, 1074B, 1032B, 1034B, 1035B, 1056B, 1058B, 1056A, 1058A, 1020A, 1022A, and 1024A. Operation 1088 is similar to operation 1080 and utilizes a classifier 1090, a first low latency queue 1092, a second low latency queue 1094, a classic queue 1096, and a priority queue 1098. Queues 1092, 1094, 1096 and 1098 are memory or data structures used to manage the flow of packets or messages within a network device or system 100 (Fig. 1A). Queues 1092 and 1094 are associated with a high performance path, and queue 1096 is associated with a low performance path in some embodiments. Queue 1098 receives messages from queues 1092 and 1094 and provides messages or data to the high performance path based upon a priority scheme associated with queues 1092 and 1094 in some embodiments. Classifier 1090 is similar to classifier 1082 and is configured to categorize or classifying network traffic based on certain criteria (e.g., by latency requirements) for queues 1092, 1094, and 1096 in some embodiments. In some embodiments, classifiers 1082 and 1090 are software modules operating on a device (e.g., server, ISP supplied device, user device, etc.). In some embodiments, queues 1084, 1086, 1092, 1094, 1096 and 1098 are virtual queues provided on the memory of the device configured by operation 1080 or 1088. In some embodiments, queues 1084, 1086, 1092, 1094, 1096 and 1098 are dedicated hardware queues (e.g., FIFO memories) on the device. Classifiers 1090 and 1082 and queues 1084, 1086, 1092, 1094, 1096 and 1098 are implemented in an application layer of the device and may utilize services and structures provided by the media access layer and the physical layer in some embodiments. Classifiers 1082 and 1090 can be configured by commands provided by BQUICK_TOP server 1012 to appropriately classify low latency traffic in some embodiments.

In some embodiments, applications 1080 and 1088 are configured to operate at nodes associated with devices including but not limited to ONU 1020, modem 1030, set top box 1036, television 1024, access point 1031, user device 1032, and/or router 1074. Applications 1080 and 1088 are configured to control and/or partition subscribed low latency bandwidth traffic (e.g., 20 Mbps vs 50 Mbps), track latency statistics (e.g., minimum, maximum, average latencies for low latency flows), process five tuples (e.g., source IP address, source port, destination IP address, destination port, transport protocol) for X number of flows (where X is any integer) with latency and/or bandwidth requirements, monitor latency introduced by a node, provide timestamps at ingress and egress ports, monitor buffer depths, perform boundary clock precision protocol (e.g., IEEE 10588-2008 standard and extensions thereof), and prioritize traffic among multiple low latency clients. Monitored and measured information can be appended to packets for provision to other nodes and servers (e.g., server 1012). For example, time stamps can be applied to packets at each node or device. Latency can be determined by comparing time stamps. Applications 1080 and 1088 are also configured to track status of low latency applications and provide a user interface for controlling low latency configurations in some embodiments. Classifiers 1082 and 1090 and/or queues 1084, 1086, 1092, 1094, 1096 are configured by applications 1030B, 1031B, 1036B, 1074B, 1032B, 1034B, 1035B, 1056B, 1058B, 1056A, 1058A, 1020A, 1022A, and 1024A (e.g., at each respective node) in some embodiments. In some embodiments, servers 1012, 1012A, and 1012B configure classifiers 1082 and 1090 and/or queues 1084, 1086, 1092, 1094, 1096 via virtual connections.

Applications 1080 and 1088 can identify end to end bandwidth available for low latency applications, provide a user real time feedback of monitored latency, and adjust latency responses. The adjustment may be in response to purchased services or bandwidth upgrades in some embodiments. In some embodiments, applications 1080 and 1088 can be configured to provide an advertisement or customer offer for low latency resources. Applications 1080 and 1088 can address variable latency for each user and adjust responses to the latency level at a particular time, for a particular time period, etc. Latency information can be communicated to servers 1012A, 1012B, and 1012 and applications 1030B, 1031B, 1036B, 1074B, 1032B, 1034B, 1035B, 1056B, 1058B, 1056A, 1058A, 1020A, 1022A, and 1024A as timestamps appended to packets as described herein, or to a packet identifier (e.g., 5 tuples and sequence number) in some embodiments. The time stamp information can be sent to servers 1012A, 1012B, and/or 1012 via an independent virtual/logical channel in some embodiments.

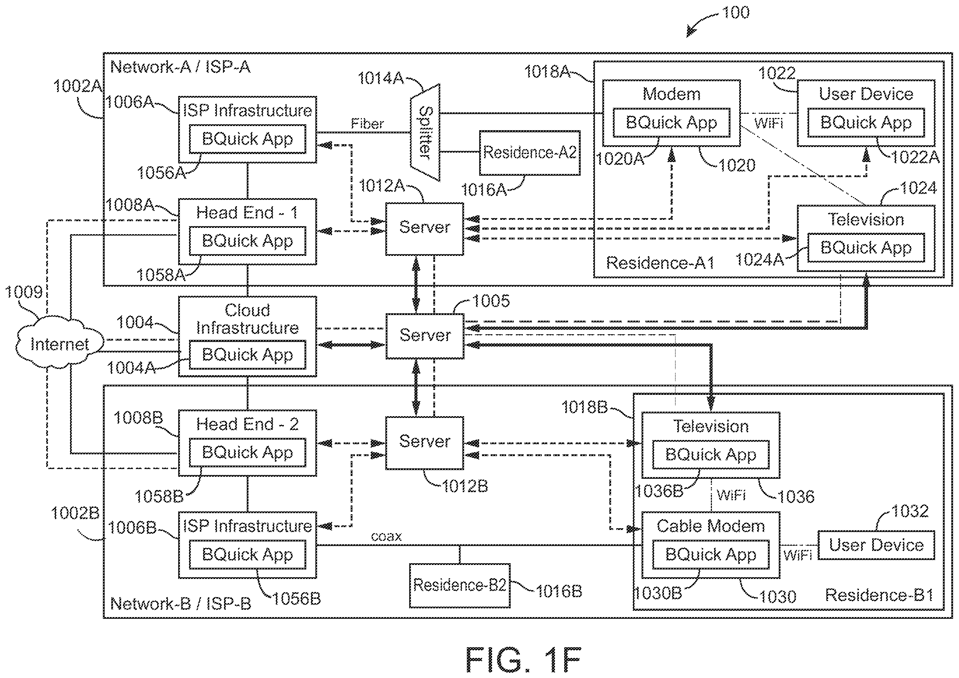

With reference to FIG. 1F, cloud infrastructure 1004 can include an application 1004A. Application 1004A is similar to applications 1030B, 1031B, 1036B, 1074B 1032B, 1034B, 1035B, 1056B, and 1058B. BQUICK_TOP server 1012 can be configured to monitor AR/VR applications and/or metaverse applications. An application executed on BQUICK_TOP server 1012 can perform the monitoring functions. Application 1004A is in communication with BQUICK_TOP server 1012. Servers 1012A and 1012B can include an application similar to application 1004A.

Using applications 1020A, 1024A, 1030B, 1032B, 1034B, 1035B, 1036B, 137A, and 1032B, the devices given by ISPs, customer-owned AR/VR setups, mobile phones, over the top (OTT) devices, and cloud gaming clients are capable of facilitating low latency uses. Applications, 1020A, 1024A, 1030B, 1032B, 1034B, 1035B, 1036B, 137A, and 1032B allow devices in residences 1018A and 1018B to interact with the server extension integrated in the ONU 1020 and modems 1030 or routers (e.g., ISP provided). Additionally, the server extensions have the ability to filter and transmit all necessary information to servers 1012A and 1012B or share open data with application developers.

### C. Computing Environment

Prior to discussing the specifics of embodiments of the systems and methods of the present solution, it may be helpful to discuss the computing environments in which such embodiments may be deployed.

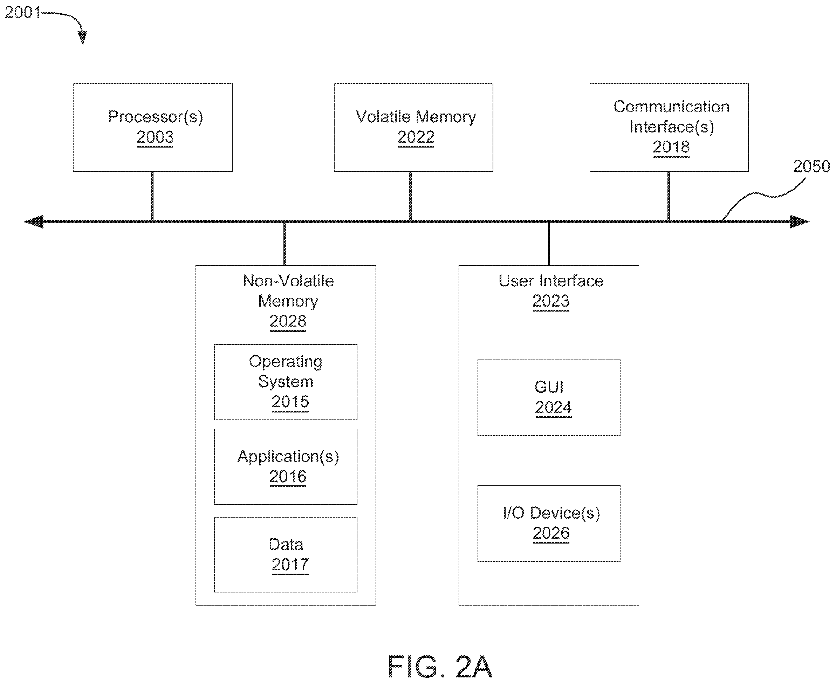

As shown in FIG. 2A, computer 2001 may include one or more processors 2003, volatile memory 2022 (e.g., random access memory (RAM)), non-volatile memory 2028 (e.g., one or more hard disk drives (HDDs) or other magnetic or optical storage media, one or more solid state drives (SSDs) such as a flash drive or other solid state storage media, one or more hybrid magnetic and solid state drives, and/or one or more virtual storage volumes, such as a cloud storage, or a combination of such physical storage volumes and virtual storage volumes or arrays thereof), user interface (UI) 2023, one or more communications interfaces 2018, and communication bus 2050. User interface 2023 may include graphical user interface (GUI) 2024 (e.g., a touchscreen, a display, etc.) and one or more input/output (I/O) devices 2026 (e.g., a mouse, a keyboard, a microphone, one or more speakers, one or more cameras, one or more biometric scanners, one or more environmental sensors, one or more accelerometers, a remote control, a video game controller, or joystick, etc.). Non-volatile memory 2028 stores operating system 2015, one or more applications 2016, and data 2017 such that, for example, computer instructions of operating system 2015 and/or applications 2016 are executed by processor(s) 2003 out of volatile memory 2022. In some embodiments, volatile memory 2022 may include one or more types of RAM and/or a cache memory that may offer a faster response time than a main memory. Data may be entered using an input device of GUI 2024 or received from I/O device(s) 2026. Various elements of computer 2001 may communicate via one or more communication buses, shown as communication bus 2050.

Computer 2001, as shown in FIG. 2A, is shown merely as an example. Clients, servers, intermediary devices, and other networking devices may be implemented by any computing or processing environment and with any type of machine or set of machines that may have suitable hardware and/or software capable of operating, as described herein. Processor(s) 2003 may be implemented by one or more programmable processors to execute one or more executable instructions, such as a computer program, to perform the functions of the system. As used herein, the term "processor" describes circuitry that performs a function, an operation, or a sequence of operations. The function, operation, or sequence of operations may be hard coded into the circuitry or soft coded by way of instructions held in a memory device and executed by the circuitry. A "processor" may perform the function, operation, or sequence of operations using digital values and/or using analog signals. In some embodiments, the "processor" can be embodied in one or more application specific integrated circuits (ASICs), microprocessors, digital signal processors (DSPs), graphics processing units (GPUs), microcontrollers, field programmable gate arrays (FPGAs), programmable logic arrays (PLAs), multi-core processors, or general-purpose computers with associated memory. The "processor" may be analog, digital or mixed-signal. In some embodiments, the "processor" may be one or more physical processors or one or more "virtual" (e.g., remotely located or "cloud") processors. A processor including multiple processor cores and/or multiple processors multiple processors may provide functionality for parallel, simultaneous execution of instructions or for parallel, simultaneous execution of one instruction on more than one piece of data.

Communications interfaces 2018 may include one or more interfaces to enable computer 2001 to access a computer network such as a Local Area Network (LAN), a Wide Area Network (WAN), a Personal Area Network (PAN), or the Internet through a variety of wired and/or wireless or cellular connections.

In some implementations, the computing device 2001 may execute an application on behalf of a user of a client computing device. For example, the computing device 2001 may execute a virtual machine, which provides an execution session within which applications execute on behalf of a user or a client computing device, such as a hosted desktop session. The computing device 2001 may also execute a terminal services session to provide a hosted desktop environment. The computing device 2001 may provide access to a computing environment including one or more of: one or more applications, one or more desktop applications, and one or more desktop sessions in which one or more applications may execute.

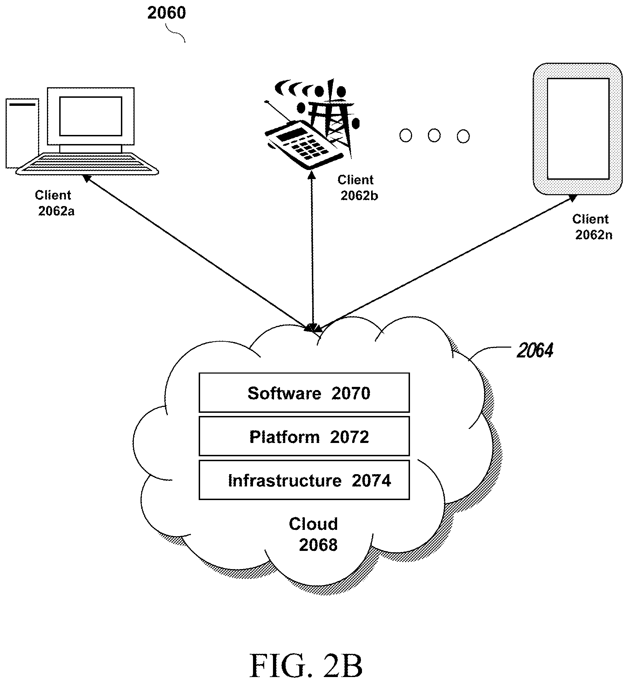

Referring to FIG. 2B, a computing environment 2060 is depicted. Computing environment 2060 may generally be considered implemented as a cloud computing environment, an on-premises ("on-prem") computing environment, or a hybrid computing environment including one or more on-prem computing environments and one or more cloud computing environments. When implemented as a cloud computing environment, also referred as a cloud environment, cloud computing or cloud network, computing environment 2060 can provide the delivery of shared services (e.g., computer services) and shared resources (e.g., computer resources) to multiple users. For example, the computing environment 2060 can include an environment or system for providing or delivering access to a plurality of shared services and resources to a plurality of users through the internet. The shared resources and services can include, but are not limited to, networks, network bandwidth, servers, processing, memory, storage, applications, virtual machines, databases, software, hardware, analytics, and intelligence.

In some embodiments, the computing environment 2060 may provide client 2062 with one or more resources provided by a network environment. The computing environment 2062 may include one or more clients 2062a-2062n, in communication with a cloud 2068 over one or more networks 2064. Clients 2062 may include, e.g., thick clients, thin clients, and zero clients. The cloud 108 may include back end platforms, e.g., servers 106, storage, server farms or data centers. The clients 2062 can be the same as or substantially similar to computer 2001 of FIG. 2A.

The users or clients 2062 can correspond to a single organization or multiple organizations. For example, the computing environment 2060 can include a private cloud serving a single organization (e.g., enterprise cloud). The computing environment 2060 can include a community cloud or public cloud serving multiple organizations. In some embodiments, the computing environment 2060 can include a hybrid cloud that is a combination of a public cloud and a private cloud. For example, the cloud 108 may be public, private, or hybrid. Public clouds 108 may include public servers that are maintained by third parties to the clients 2062 or the owners of the clients 2062. The servers may be located off-site in remote geographical locations as disclosed above or otherwise. Public clouds 2068 may be connected to the servers over a public network 2064. Private clouds 2068 may include private servers that are physically maintained by clients 2062 or owners of clients 2062. Private clouds 2068 may be connected to the servers over a private network 2064. Hybrid clouds 2068 may include both the private and public networks 2064 and servers.

The cloud 2068 may include back end platforms, e.g., servers, storage, server farms or data centers. For example, the cloud 2068 can include or correspond to a server or system remote from one or more clients 2062 to provide third party control over a pool of shared services and resources. The computing environment 2060 can provide resource pooling to serve multiple users via clients 2062 through a multi-tenant environment or multi-tenant model with different physical and virtual resources dynamically assigned and reassigned responsive to different demands within the respective environment. The multi-tenant environment can include a system or architecture that can provide a single instance of software, an application or a software application to serve multiple users. In some embodiments, the computing environment 2060 can provide on-demand self-service to unilaterally provision computing capabilities (e.g., server time, network storage) across a network for multiple clients 2062. The computing environment 2060 can provide an elasticity to dynamically scale out or scale in responsive to different demands from one or more clients 2062. In some embodiments, the computing environment 2060 can include or provide monitoring services to monitor, control and/or generate reports corresponding to the provided shared services and resources.

In some embodiments, the computing environment 2060 can include and provide different types of cloud computing services. For example, the computing environment 2060 can include infrastructure as a service (IaaS). The computing environment 2060 can include platform as a service (PaaS). The computing environment 2060 can include serverless computing. The computing environment 2060 can include software as a service (SaaS). For example, the cloud 2068 may also include a cloud based delivery, e.g., software as a service (SaaS) 2070, platform as a service (PaaS) 2072, and infrastructure as a service (IaaS) 2074. IaaS may refer to a user renting the use of infrastructure resources that are needed during a specified time period. IaaS providers may offer storage, networking, servers or virtualization resources from large pools, allowing the users to quickly scale up by accessing more resources as needed. Examples of IaaS include AMAZON WEB SERVICES provided by Amazon.com, Inc., of Seattle, Washington, RACKSPACE CLOUD provided by Rackspace US, Inc., of San Antonio, Texas, google compute engine provided by Google Inc. of Mountain View, California, or RIGHTSCALE provided by Right Scale, Inc., of Santa Barbara, California. PaaS providers may offer functionality provided by IaaS, including, e.g., storage, networking, servers or virtualization, as well as additional resources such as, e.g., the operating system, middleware, or runtime resources. Examples of PaaS include WINDOWS AZURE provided by Microsoft Corporation of Redmond, Washington, Google App Engine provided by Google Inc., and HEROKU provided by Heroku, Inc. of San Francisco, California. SaaS providers may offer the resources that PaaS provides, including storage, networking, servers, virtualization, operating system, middleware, or runtime resources. In some embodiments, SaaS providers may offer additional resources including, e.g., data and application resources. Examples of SaaS include GOOGLE APPS provided by Google Inc., SALESFORCE provided by Salesforce.com Inc. of San Francisco, California, or OFFICE 365 provided by Microsoft Corporation. Examples of SaaS may also include data storage providers, e.g., DROPBOX provided by Dropbox, Inc. of San Francisco, California, Microsoft SKYDRIVE provided by Microsoft Corporation, Google Drive provided by Google Inc., or Apple ICLOUD provided by Apple Inc. of Cupertino, California.

Clients 2062 may access IaaS resources with one or more IaaS standards, including, e.g., Amazon Elastic Compute Cloud (EC2), Open Cloud Computing Interface (OCCI), Cloud Infrastructure Management Interface (CIMI), or OpenStack standards. Some IaaS standards may allow clients access to resources over HTTP and may use Representational State Transfer (REST) protocol or Simple Object Access Protocol (SOAP). Clients 2062 may access PaaS resources with different PaaS interfaces. Some PaaS interfaces use HTTP packages, standard Java APIs, Java Mail API, Java Data Objects (JDO), Java Persistence API (JPA), Python APIs, web integration APIs for different programming languages including, e.g., Rack for Ruby, WSGI for Python, or PSGI for Perl, or other APIs that may be built on REST, HTTP, XML, or other protocols. Clients 2062 may access SaaS resources through the use of web-based user interfaces, provided by a web browser (e.g., GOOGLE CHROME, Microsoft INTERNET EXPLORER, or Mozilla Firefox provided by Mozilla Foundation of Mountain View, California). Clients 2062 may also access SaaS resources through smartphone or tablet applications, including, e.g., Salesforce Sales Cloud, or Google Drive app. Clients 2062 may also access SaaS resources through the client operating system, including, e.g., Windows file system for DROPBOX.

In some embodiments, access to IaaS, PaaS, or SaaS resources may be authenticated. For example, a server or authentication server may authenticate a user via security certificates, HTTPS, or API keys. API keys may include various encryption standards such as, e.g., Advanced Encryption Standard (AES). Data resources may be sent over Transport Layer Security (TLS) or Secure Sockets Layer (SSL).

Although examples of communications systems described above may include devices operating according to an Ethernet and other standards, it should be understood that embodiments of the systems and methods described can operate according to alternative standards and use various wireless communication devices. For example, multiple-unit communication interfaces associated with cellular networks, satellite communications, vehicle communication networks, wired networks, and networks can utilize the systems and methods described herein without departing from the scope of the systems and methods described herein.

### D. Systems and Methods for Improving Quality of Experience of Low Latency Applications While Roaming in a Wireless Network

Below are detailed descriptions of various concepts related to, and embodiments of, techniques, approaches, methods, apparatuses, and systems for improving quality of experience of low latency applications while roaming in a wireless network. The various concepts introduced above and discussed in greater detail below may be implemented in any of numerous ways, as the described concepts are not limited to any particular manner of implementation. Examples of specific embodiments and applications are provided primarily for illustrative purposes.

The technical solutions disclosed herein can address the challenges of packet loss and traffic accumulation at access points during client roaming. The technical solutions can allow a device under test (DUT), such as a switch, cable modem, or gateway, to manage connections across multiple access points. For example, the DUT can be configured to maintain per-client queuing and scheduling. Each access point can periodically send feedback messages in Ethernet packets to the DUT. These messages can include traffic management statistics, such as the average queue depth within the access point's memory. By processing the feedback, the DUT can dynamically adjust or pause the network traffic rate for individual client devices associated with each access point. For example, the dynamic adjustment can include reducing the rate of a client's data from the switch to the access point if the signal strength or signal to noise ratio falls below a threshold. This traffic management can help prevent congestion and improve data flow across the network.

The technical solutions can be particularly advantageous for low latency applications, such as video conferencing, by facilitating a seamless roaming experience by initiating the handoff or roaming and allowing the connection transfer between access points. For instance, the client scheduler can prioritize packets based on application type. For example, packets from real-time conferencing applications can be prioritized over regular web browsing traffic. This prioritization can minimize delays and maintain a seamless user experience for applications sensitive to latency. During roaming, packets are not dropped but can be redirected to the new access point. Furthermore, the switch can transfer packets from the client scheduler for the port connected to the departing access point to the client scheduler for the port connected to the destination access point, providing efficient packet delivery during the handoff. A port in the context of a network switch can refer to a logical connection point (such as a VLAN interface or a port channel) or a physical interface (such as an Ethernet port or a fiber optic port) that allows devices to connect to the switch.

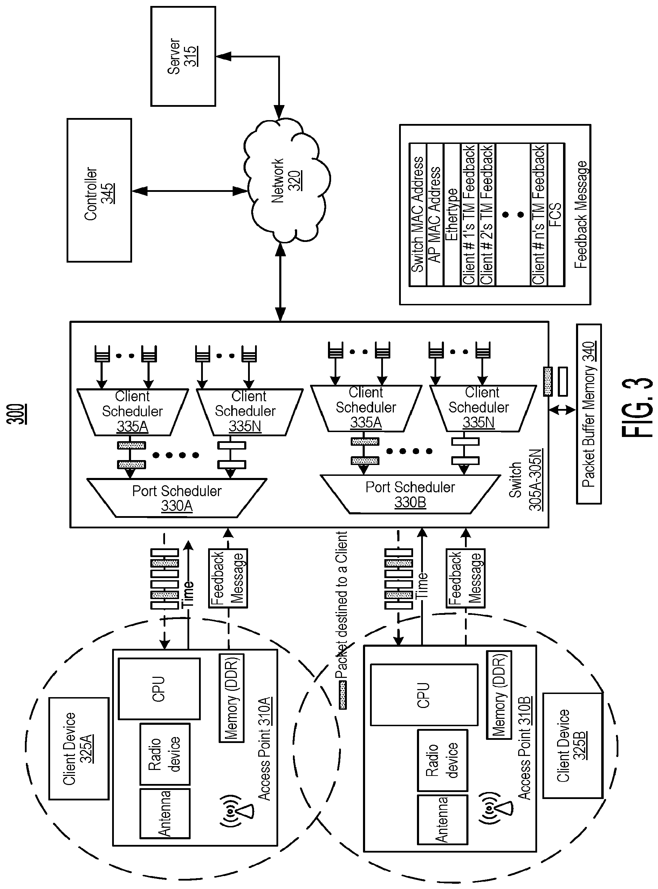

FIG. 3 illustrates an example system 300 for improving quality of experience of low latency applications while roaming in a wireless network. Example system 300 can include one or more switches 305A-305N (sometimes referred to herein as a switch 305) coupled with one or more access points 310A-310B (sometimes referred to herein as an access point 310). The example system 300 can include one or more servers 315 communicatively coupled with the one or more access points 310 and the one or more switches 305 over one or more networks 320. The example system 300 can include one or more controllers 345 communicatively coupled with the one or more access points 310 and the one or more switches 305 over the one or more networks 320. The example system 300 can include one or more client devices 325A-325B (sometimes referred to herein as a client device 325) communicatively coupled with the one or more access points 310. Any of the systems described in connection with FIGS. 1A-1F and 2A-2B can be configured, constructed, or implemented to implement, operate, and/or use any of the options and techniques described in FIG. 3.

The switch 305 can include one or more port schedulers 330A-330B (sometimes referred to herein as a port scheduler 330), one or more client schedulers 335A-335N (sometimes referred to herein as a client scheduler 335), and one or more packet buffer memory 340. The server 315 can be referred to herein as the latency server, such as the latency server 1005, as described in connection with FIGS. 1A-1F. The sever 315 can include one or more low latency controllers for identifying, managing, and controlling the latency of low latency applications. The access point 310 can include one or more low latency agents to provide localized management at the access point 310 level. The server can communicate with the access point 310 or the driver of such devices via the network 320. The network 320, e.g., similar to the network 2064 described in connection with FIG. 2B, can include computer networks such as the Internet, local, wide, metro, or other area networks, intranets, satellite networks, other computer networks such as voice or data mobile phone communication networks, and combinations thereof. The server 315, access point 310, switch 305, controller 345, or any of the described computing devices may communicate wirelessly (e.g., via Wi-Fi, cellular, radio, etc.) with a transceiver that is hardwired (e.g., via a fiber optic cable, a CAT5 cable, etc.) to other computing devices.

The access point 310 can include a device, system, or module (including a combination of hardware and software) that allows wireless communication devices to connect to a wired network using wireless fidelity (Wi-Fi), or other standards. The access point 310 can sometimes be referred to as a wireless access point (WAP). The access point 310 can include components, such as an antenna for transmitting and receiving wireless signals, a radio device for managing wireless communications, a CPU for processing data and control operations, and memory (DDR) for storing operational data and configurations. The access point 310 can be implemented (e.g., configured, designed, and/or built) for operating in a wireless local area network (WLAN). The access point 310 can connect to a router (e.g., via a wired network) as a standalone device in some embodiments. In some embodiments, the access point 310 can be a component of a router. The access point 310 can provide multiple devices with access to a network. The access point 310 can, for example, connect to a wired Ethernet connection and provide wireless connections using radio frequency links for other devices to utilize that wired connection. The access point 310 can be implemented to support a standard for sending and receiving data using one or more radio frequencies. Those standards, and the frequencies they use can be defined by the IEEE (e.g., IEEE 802.11 standards). The access point 310 can be configured and/or used to support Internet hotspots, and/or on a network to extend the network's Wi-Fi signal range.

The client device 325 (which can also be referred to interchangeably as a client) can be a wireless communication device configured for wireless communication in wireless communication networks, such as a LAN, WAN, or cellular network. The client device 325 can be configured to communicate wirelessly with network devices, such as the access point 310, using any of the IEEE standards (e.g., IEEE 802.11 standards). The client device 325 can be any of the user devices described in connection with FIGS. 1A-1F. In some embodiments, the client devices 325 can include one or more clients 2062, as described in FIG. 2B, and/or one or more client devices connected to the network 320 or the network 2064 to access resources or services.

The switch 305 can include a device, system, or module (including a combination of hardware and software) that facilitates the routing and forwarding of data packets within a network. The switch 305 can operate by receiving signals from transmitting devices and determining efficient paths for these signals to reach their intended destinations. The switch 305 can process header information within each packet to determine the destination. The switch 305 can manage wired and wireless devices. The switch 305 can integrate wireless access point functionality. The switch 305 can operate at Layer 2 (Data Link Layer) or Layer 3 (Network Layer) of the OSI model. The switch 305 can utilize Ethernet protocols to forward data based on MAC addresses (Layer 2) or IP addresses (Layer 3).

Each switch 305 of the one or more switches 305 can include a port scheduler 330, which can be any type and form of executable instructions, such as an application, program, service, task, process, script, library, etc. The port scheduler 330 can be designed and configured to allocate bandwidth on a per-port basis. The port scheduler 330 can operate as a program running on the switch 305, allowing the switch 305 to manage traffic efficiently at each port. The port scheduler 330 can facilitate effective resource utilization across all connected devices by operating based on a predefined set of rules that govern bandwidth allocation. The rules can include static allocation, where a fixed percentage of bandwidth is assigned to each port, or dynamic allocation, where bandwidth is adjusted in real-time based on traffic conditions. In some embodiments, users can configure the port scheduler 330 to meet specific bandwidth requirements for ports handling diverse types of network traffic.

Each switch 305 of the one or more switches 305 can include a client scheduler 335, which can be any type and form of executable instructions, such as an application, program, service, task, process, script, library, etc. The client scheduler can be designed and configured to schedule the packets aggregated by the port scheduler 330 for each client device 325 associated with an access point 310. The client scheduler 335 can receive data packets or aggregated data packets from the port scheduler 330 for a specific access point port and can maintain internal data structures to track connected client devices, the associated traffic streams, and the assigned priority levels. In some embodiments, the client scheduler 335 can receive packets from the port scheduler 330 via a custom communication protocol designed for internal communication within the switch 305. In some embodiments, the client scheduler 335 can leverage a memory interface for data exchange. The client scheduler 335 can process incoming packets and prioritize them based on rules, which can include prioritizing traffic based on application-specific settings and allowing users to define custom priority levels for specific clients or applications. Depending on the implementation, the client scheduler 335 can use various scheduling mechanisms, such as priority queues, where packets are placed in separate queues based on their priority, with higher-priority queues being served first. The client scheduler 335 can monitor network traffic and individual client device usage patterns, using this information to dynamically adjust priorities based on real-time network conditions. In some embodiments, the functionalities of the client scheduler 335 can be performed by the port scheduler 330, providing a more integrated or streamlined approach to traffic management and scheduling within the switch 305.

In some embodiments, the one or more switches 305 can receive feedback messages from each access point 310 to which the switch 305 is connected. Feedback messages are informational packets exchanged between network devices to provide data about network conditions. These feedback messages, encapsulated within Ethernet packets, can include various pieces of information to improve network management. For example, the feedback messages can include the switch MAC address and the AP MAC address as identifiers, along with the Ethertype to specify the protocol for processing the message. The feedback messages can indicate the signal strength between the access point 310 and each connected client device 325. The feedback messages can provide specific traffic management (TM) statistics (such as average packet queue depth) of every client device 325 associated with that access point 310 to determine network congestion. The feedback message can include a frame check sequence (FCS) to maintain the integrity of the data transmitted and help determine any errors that may occur during transmission.

In some embodiments, the one or more switches 305 can include a packet buffer memory 340, which can be a memory space configured for the storage of data packets, such as packets awaiting transmission over a network or received to be communicated or forwarded to another device. The packet buffer memory 340 can be configured to manage data packets and facilitate seamless data flow through the network. For example, when packets arrive at the switch 305, they can be temporarily held in the packet buffer memory 340 until the switch 305 can process and forward them to their destination. In some embodiments, the packet buffer memory 340 can be configured to store data packets that have been received over the network, managing both incoming and outgoing traffic. The memory space of the packet buffer memory 340 can be organized in different ways depending on the switch architecture. For example, the packet buffer memory 340 can include shared memory, where a single large memory pool is accessible by all switch ports; per-port memory, where each switch port can have its own memory buffer, simplifying management; and a hybrid approach, where some switches can combine elements of both shared and per-port memory to offer both flexibility and scalability.

The controller 345 can be a device, system, or module (including a combination of hardware and software) that can control or manage one or more access points 310 within a network. In some embodiments, the controller 345 can control one or more access points 310 via one or more switches 305. In some embodiments, the controller 345 can provide deployment flexibility. For example, the controller 345 can be deployed on a separate network device or on a server, such as the server 315, accessible through the network 320. The controller 345 can function as a manager for a group of access points 310, for example, where the access points 310 are connected to a plurality of switches 305 within the network. Depending on the embodiment, a dedicated controller device, a switch with an integrated controller, or a network gateway with an embedded controller can implement the functionality. In some embodiments, a network can have more than one switch 305 connected to one or more access points 310, and the access points 310 connected to these switches 305 can be controlled by a single controller 345. This configuration can allow client devices 325 to seamlessly roam between access points 310, for example, where the access points 310 are connected to different switches 305 in the network. For example, client devices 325 can roam from one access point 310 connected to one switch 305 to another access point 310 connected to a different switch 305 in the network. The controller 345 can facilitate the roaming process by coordinating with the switches 304 and the access points 310.

In some embodiments, the controller 345 can configure the connected access points 310 by adjusting settings such as security protocols, channel selection, and roaming behaviors to avoid interference as the client devices 325 switch between access points 310. In some embodiments, the controller 345 can manage client association and authentication. In some embodiments, the controller 345 can improve traffic flow across the network by directing data to the suitable access point 310 based on a radio signal strength indicator or signal to noise ratio collected from the access points 310.

In some embodiments, the controller 345 can be configured to terminate the feedback messages or filter specific types of feedback messages from the access points 310. In some embodiments, based on the feedback received, the controller 345 can be configured to dynamically manage network traffic. For example, the controller 345 can pause or adjust the rate of network traffic between the switch 305 and individual client devices 325 associated with a particular access point 310, allowing for improved network performance based on real-time conditions.

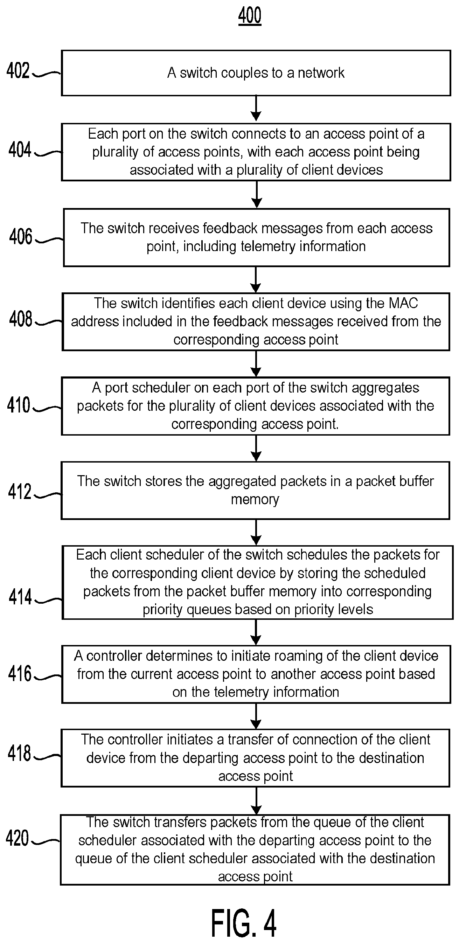

FIG. 4 illustrates a method 400 of improving quality of experience of low latency applications while roaming in a wireless network. The method 400 can be implemented using a system 100, 300, or any other features discussed in FIGS. 1-3. The method 400 can include acts 402-420. At 402, a switch can couple to a network. At 404, each port on the switch can connect to an access point of a plurality of access points, with each access point being associated with a plurality of client devices. At 406, the switch can receive feedback messages from each access point, including telemetry information. At 408, the switch can identify each client device using the MAC address included in the feedback messages received from the corresponding access point. At 410, a port scheduler on each port of the switch can aggregate packets for the plurality of client devices associated with the corresponding access point. At 412, the switch can store the aggregated packets in packet buffer memory. At 414, each client scheduler of the switch can schedule the packets for the corresponding client device by storing the scheduled packets from the packet buffer memory into corresponding priority queues based on priority levels. At 416, a controller can determine to initiate roaming of the client device from the current access point to another access point based on the telemetry information. At 418, the controller can initiate a transfer of connection of the client device from the current access point to another access point. At 420, the switch can transfer the packets from the queue of the client scheduler associated with the departing access point to the queue of the client scheduler associated with the destination access point.

At 402, a switch can couple to or be coupled to a network. The switch can include a built-in network interface card (NIC) or a configurable network port that can facilitate connectivity to the network. In some embodiments, the switch can include a plurality of ports. In some embodiments, a network cable can be used to connect the switch's NIC port to various network devices, including routers, access points, and other switches, among others. In some embodiments, the switch can be in communication with a plurality of access points wirelessly and/or over wired connections.

At 404, each port on the switch can connect to an access point of a plurality of access points, with each access point being associated with a plurality of client devices. In some embodiments, each port on the switch can be connected to the access point using the network cable. The access points can provide connectivity to the client devices wirelessly or through a wired connection, depending on the implementation.

At 406, the switch can receive feedback messages from each access point, including telemetry information. For example, a controller of the switch can receive feedback messages from each access point of the plurality of access points connected to a corresponding port of the switch. In some embodiments, the feedback messages can be transmitted in Ethernet packets by the access point. The feedback messages can include telemetry information on each client connected to the access points. Telemetry information can be a collection of data points gathered from remote sources to monitor and analyze system performance. For example, the telemetry information can refer to data collected from client devices connected to access points. The telemetry data in the feedback messages can include metrics such as the radio signal strength indicator (also referred to herein as the received signal strength indicator, or RSSI) or the signal-to-noise ratio (SNR). In some embodiments, the RSSI can indicate the strength of the wireless signal received by the client device from the access point. For example, the RSSI can indicate the power level of the signal received by the client device from the access point. In some embodiments, the value of the RSSI can help determine if the signal strength is sufficient for a stable wireless connection. The SNR can indicate the strength of a desired signal (e.g., a signal from the access point) compared to background noise. The SNR can be defined as the ratio of signal power to noise power. In some embodiments, the feedback messages can include traffic management (TM) statistics. The TM statistics can be specific to each client device associated with the access point. In some embodiments, the TM statistics can indicate the average number of packets waiting to be transmitted in the access point's memory for each client device associated with that access point.

In some embodiments, the switch can adjust traffic rates based on the telemetry information. Traffic rates refer to the speed at which data is transmitted over a network. Traffic rates can be measured in bits per second (bps) or megabits per second (Mbps). In some embodiments, the traffic rates can indicate the volume of data flowing between the switch, access points, and client devices, among others. The switch (e.g., via a network controller) can adjust traffic rates based on telemetry information to improve network performance and manage congestion. For example, if a client device is experiencing a high data rate but has a weak signal, the switch can reduce the traffic rate to prevent packet loss.

At 408, the switch can identify each client device using the MAC address included in the feedback messages received from the corresponding access point. The access points can include a media access control (MAC) address of each connected client device within the feedback messages transmitted to the switch. The MAC address can be used to identify the device on a network. The feedback messages can be transmitted within Ethernet packets, which include fields in the packet header for source and destination MAC addresses. The access point can use its own MAC address as the source address in the packet header when transmitting the feedback message to the switch. The access point can set the destination address in the packet header to the MAC address of the specific switch port the access point is connected to. Upon receiving the Ethernet packet that includes the feedback message, the switch can process the packet based on the destination MAC address in the packet header. In some embodiments, within the feedback message payload (data portion), the switch can extract the client's MAC address provided by the access point. By associating the client MAC address with the specific access point that transmitted the message, as identified by the source MAC address in the packet header, the switch can identify the client device on the network.

At 410, a port scheduler on each port of the switch can aggregate packets for the plurality of client devices associated with the corresponding access point. Each port can include a port scheduler that aggregates packets received by the switch from the network for the client devices associated with the access point. The port scheduler can combine multiple data packets destined for the same client device into a single packet, effectively streamlining the data transmission process. In some embodiments, the port scheduler can aggregate downstream traffic to the client devices that are associated with the access point.

At 412, the switch can store the aggregated packets in packet buffer memory. The packet buffer memory can be a memory space set aside for storing incoming and outgoing data packets. The size of the packet buffer can vary depending on the switch model and network requirements. In some switch models, the packet buffer memory can be large enough to accommodate situations where there is a temporary slowdown in client data processing speeds, while the network traffic continues at a normal pace or even increases.

At 414, each client scheduler of the switch can schedule the packets for the corresponding client device by storing the scheduled packets from the packet buffer memory into corresponding priority queues based on priority levels. The switch can include a client scheduler for the client device associated with the access point of each port. For example, each client device associated with the access point can have a client scheduler on the switch. In some embodiments, each port scheduler can be configured to select the client scheduler based on scheduling algorithms, such as strict priority, distributed relay-assisted retransmission (DRR), etc., to determine the order in which packets are to be transmitted to the access point for each client device associated with the access point.

Each client scheduler can access the packet buffer memory of the switch and retrieve aggregated packets for the respective client devices. The client schedulers can schedule the packets, placing them in priority queues maintained within the switch based on the priority levels of the packets (e.g., high priority for video conferencing applications, low priority for file downloads, etc.). In some embodiments, the priority queues can function as temporary holding areas within the switch, categorized by different priority levels (e.g., high, medium, and low). In some embodiments, the priority queues can correspond to lists of packets at that specific priority level.

Each client scheduler can be configured to allow for rate adjustment of the scheduled packets for the client devices associated with the access point based on telemetry data received from the access point feedback messages. The telemetry can include, among others, RSSI and SNR for each client device. The client scheduler can use the telemetry data to prioritize packets for the client device. The client scheduler can prioritize packets for the client devices based on a threshold. In this regard, the threshold can refer to a certain RSSI level and/or SNR value, depending on the implementation, that can be used as a reference point for prioritization. For example, the switch can be configured (e.g., via the port scheduler or the client scheduler, depending on the implementation) to reduce the rate of transmission of scheduled packets to the client devices whose RSSI or SNR falls below the threshold. In some embodiments, the switch can be configured (e.g., via the port scheduler or the client scheduler, depending on the implementation) to prioritize packets of the client devices whose RSSI or SNR is above the threshold.

At 416, a controller can determine to initiate roaming of the client device from the current access point to another access point based on the telemetry information. Roaming, in the context of wireless networks, refers to the process by which a client device moves connectivity, such as wireless communications connectivity, between an access point and another access point. For example, a client device may establish a connection with a first access point, and when the client device moves closer (e.g., physical proximity and/or signal strength) to another access point, the client device establishes a connection with another access point. In some embodiments, the controller can determine whether to initiate roaming of the client device from the associated access point to a different access point within the network based on telemetry information. In some embodiments, the access points connected to different switches can be controlled by a single controller. When a client device's connection to an access point weakens, the data rate may drop despite a constant packet flow from the network. The access point can buffer the client device's packets to manage the difference in rates. However, this buffer can overflow, leading to traffic accumulation at the access point with a weakened signal. In some embodiments, another client device's connection to the same access point may strengthen, allowing the access point to transmit data at a higher rate to that client device. However, due to a lack of bandwidth sharing on the interface, the switch will continue to transmit the previously connected client device's traffic at a high rate despite its weakened signal, starving the other client device of bandwidth.

In this regard, if the telemetry data indicates that a client device's RSSI or SNR falls below the threshold (indicating a weak signal), the controller of the switch can determine whether to initiate roaming for that client device. The controller can identify other access points within the network and compare the client device's current connection quality (RSSI or SNR) of the client's device with the signal strength and noise levels reported by these other access points. If the controller determines another access point with a higher RSSI or SNR (indicating a stronger signal), the controller can initiate the roaming of the client device from the access point the client device is currently associated with to the access point with better signal strength and/or signal to noise ratio.

At 418, the controller can initiate a transfer of connection of the client device from the current access point to another access point. For example, the controller can initiate the transfer of the connection of the client device in response to initiating roaming from one access point to another access point. The connection can facilitate the transmission of data packets generated by the application running on the client device. These data packets can include the application's specific information and instructions. Instructions can refer to the specific data within a data packet that dictates the actions to be taken by the receiving device. The transfer of the connection can include the transfer of the client's credentials (such as the service set identifier, password, or security key). Credential roaming can allow secure synchronization of user credentials, such as certificates, private keys, and passwords, across multiple devices within a network. In this regard, the switch can facilitate roaming by utilizing various protocols supported by the network, including, but not limited to, WPA/WPA2 Personal, IEEE 802.1X, 802.11i, and WPA/WPA2 Enterprise, to provide secure authentication between the client device and the destination access point during the roaming process. In some embodiments, based on the feedback messages, the switch, via the controller, can communicate instructions to the access point where the client device is currently connected to prepare for the roaming. In some embodiments, the switch, via the controller, can cause the destination access point where the client device is moving to initiate the authentication process with the client device. Authentication is the process of verifying the identity of a device to ensure that only authorized entities can access a system or network. The authentication methods can include shared keys, passwords, and extensible authentication protocol (EAP) methods, among others.

At 420, the switch can transfer the packets from the queue of the client scheduler associated with the departing access point to the queue of the client scheduler associated with the destination access point. As explained above, when a client device experiences a weak signal with an access point, but another access point provides a stronger connection, the controller of the switch can facilitate the roaming of the client device with weakened signals to a new access point. The switch, via the controller, can instruct the departing access point to temporarily buffer data packets destined for the roaming client device. However, after the roaming client device successfully associates with the destination access point and disassociates from the departing access point, any packets still buffered in the departing access point's memory may be purged. This can lead to packet loss, especially for low latency applications.

In this regard, the switch can maintain queues for each client device, where data packets are temporarily stored. During roaming, the switch can transfer these packets from the queue associated with the departing access point to the queue associated with the destination access point. In this regard, association can refer to the process by which a wireless client device connects to a specific access point within a wireless network. In some embodiments, the switch can facilitate a transfer of packets from the temporary storage area (first port buffer) associated with the departing access point to a corresponding buffer (second port buffer) on the port assigned to the destination access point. This process can occur via the same switch or involve multiple switches on the network. In some embodiments, the switch can transfer packets stored by the switch at a port buffer of the departing port for the client device associated with the departing access point to a port buffer of the destination port assigned to the destination access point, minimizing packet loss during roaming. In some embodiments, the departing port and the destination port can be in the same switch. In some embodiments, the departing port and the destination port can be in different switches, for example, where the access points are connected to different switches. In embodiments where the access points are connected to different switches, packet transfer can happen from the departing switch to the destination switch through the network. For instance, a single controller can control the departing and destination access points connected to different switches within the network.

In some embodiments, the client scheduler can prioritize or re-order packets before they are forwarded to the destination access point. For example, each data packet can be assigned a priority level based on the application it belongs to. For instance, packets originating from real-time video conferencing applications can be assigned a higher priority compared to regular web browsing traffic. By prioritizing packets from low latency applications, the switch can be configured to minimize delays while maintaining a seamless user experience for applications sensitive to latency.

It should be noted that certain passages of this disclosure may reference terms such as "first" and "second" in connection with devices, modes of operation, transmit chains, etc., for purposes of identifying or differentiating one from another or from others. These terms are not intended to merely relate entities (e.g., a first device and a second device) temporally or according to a sequence, although in some cases, these entities may include such a relationship. Nor do these terms limit the number of possible entities (e.g., devices) that may operate within a system or environment. The terms coupled or connected (which may refer to electronic or communicative coupling or connection, such as for the purposes of data transmission) include indirect and direct couplings and connections.

While the disclosure has been described with respect to specific embodiments, one skilled in the art will recognize that numerous modifications are possible. For instance, although specific examples of rules (including triggering conditions and/or resulting actions) and processes for generating suggested rules are described, other rules and processes can be implemented. Embodiments of the disclosure can be realized using a variety of computer systems and communication technologies including but not limited to specific examples described herein.

Embodiments of the present disclosure can be realized using any combination of components and/or programmable processors and/or other programmable devices. The various processes described herein can be implemented on the same processor or different processors in any combination. Where components are described as being configured to perform certain operations, such configuration can be accomplished, e.g., by designing electronic circuits to perform the operation, by programming programmable electronic circuits (such as microprocessors) to perform the operation, or any combination thereof. Further, while the embodiments described above may make reference to specific hardware and software components, those skilled in the art will appreciate that different combinations of hardware and/or software components may also be used and that particular operations described as being implemented in hardware might also be implemented in software or vice versa.

Computer programs incorporating various features of the present disclosure may be encoded and stored on various computer readable storage media; suitable media include magnetic disk or tape, optical storage media such as compact disk (CD) or DVD (digital versatile disk), flash memory, and other non-transitory media. Computer readable media encoded with the program code may be packaged with a compatible electronic device, or the program code may be provided separately from electronic devices (e.g., via Internet download or as a separately packaged computer-readable storage medium).

Thus, although the disclosure has been described with respect to specific embodiments, it will be appreciated that the disclosure is intended to cover all modifications and equivalents within the scope of the following claims.

It should be understood that the disclosed embodiments are not representative of all claimed innovations. As such, certain aspects of the disclosure have not been discussed herein. That alternate embodiments may not have been presented for a specific portion of the innovations or that further undescribed alternate embodiments may be available for a portion is not to be considered a disclaimer of those alternate embodiments. Thus, it is to be understood that other embodiments can be utilized and functional, logical, operational, organizational, structural and/or topological modifications may be made without departing from the scope of the disclosure. As such, all examples and/or embodiments are deemed to be non-limiting throughout this disclosure.

Some embodiments described herein relate to methods. It should be understood that such methods can be computer implemented methods (e.g., instructions stored in memory and executed on processors). Where methods described above indicate certain events occurring in a certain order, the ordering of certain events can be modified. Additionally, certain of the events can be performed repeatedly, concurrently in a parallel process when possible, as well as performed sequentially as described above. Furthermore, certain embodiments can omit one or more described events.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to, magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other embodiments described herein relate to a computer program product, which can include, for example, the instructions and/or computer code discussed herein.

Some embodiments and/or methods described herein can be performed by software (executed on hardware), hardware, or a combination thereof. Hardware modules may include, for example, a general-purpose processor, a field-programmable gate array (FPGA), and/or an application-specific integrated circuit (ASIC). Software modules (executed on hardware) can be expressed in a variety of software languages (e.g., computer code), including C, C++, Java^{™}, Ruby, Visual Basic^{™}, and/or other object-oriented, procedural, or other programming language and development tools. Examples of computer code include, but are not limited to, micro-code or micro-instructions, machine instructions, such as produced by a compiler, code used to produce a web service, and files containing higher-level instructions that are executed by a computer using an interpreter. For example, embodiments can be implemented using Python, Java, JavaScript, C++, and/or other programming languages and software development tools. For example, embodiments may be implemented using imperative programming languages (e.g., C, Fortran, etc.), functional programming languages (Haskell, Erlang, etc.), logical programming languages (e.g., Prolog), object-oriented programming languages (e.g., Java, C++, etc.) or other suitable programming languages and/or development tools. Additional examples of computer code include, but are not limited to, control signals, encrypted code, and compressed code.

The drawings primarily are for illustrative purposes and are not intended to limit the scope of the subject matter described herein. The drawings are not necessarily to scale; in some instances, various aspects of the subject matter disclosed herein can be shown exaggerated or enlarged in the drawings to facilitate an understanding of different features. In the drawings, like reference characters generally refer to like features (e.g., functionally similar and/or structurally similar elements).

The acts performed as part of a disclosed method(s) can be ordered in any suitable way. Accordingly, embodiments can be constructed in which processes or steps are executed in an order different than illustrated, which can include performing some steps or processes simultaneously, even though shown as sequential acts in illustrative embodiments. Put differently, it is to be understood that such features may not necessarily be limited to a particular order of execution, but rather, any number of threads, processes, services, servers, and/or the like that may execute serially, asynchronously, concurrently, in parallel, simultaneously, synchronously, and/or the like in a manner consistent with the disclosure. As such, some of these features may be mutually contradictory, in that they cannot be simultaneously present in a single embodiment. Similarly, some features are applicable to one aspect of the innovations, and inapplicable to others.

Where a range of values is provided, it is understood that each intervening value, to the tenth of the unit of the lower limit unless the context clearly dictates otherwise, between the upper and lower limit of that range and any other stated or intervening value in that stated range is encompassed within the disclosure. That the upper and lower limits of these smaller ranges can independently be included in the smaller ranges is also encompassed within the disclosure, subject to any specifically excluded limit in the stated range. Where the stated range includes one or both of the limits, ranges excluding either or both of those included limits are also included in the disclosure.

The phrase "and/or," as used herein in the specification and in the embodiments, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements can optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the embodiments, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the embodiments, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of." "Consisting essentially of," when used in the embodiments, shall have its ordinary meaning as used in the field of patent law.

As used herein in the specification and in the embodiments, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements can optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

In the embodiments, as well as in the specification above, all transitional phrases such as "comprising," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

## Claims

1. A method comprising:
receiving, by a controller (345), feedback messages from each access point (310), of a plurality of access points (310), wherein each access point (310) is connected to a corresponding port of a plurality of ports of a switch (305), the feedback messages comprising telemetry information on each client of the one or more clients connected to each access point (310);
determining, by the controller (345) based at least on the telemetry information, to initiate roaming of a client of the one or more clients from a first access point (310) of the plurality of access points (310) to a second access point (310) of the plurality of access points (310); and
initiating, by the controller (345), a transfer of the connection of the client with the first access point (310) to the second access point (310), the transfer including transferring of data stored on the first access point (310) for the client to the second access point (310).

2. The method of claim 1, wherein the telemetry data of the feedback messages comprises at least one of radio signal strength indicator, RSSI, or signal to noise ratio.

3. The method of claim 2, further comprising determining, by the controller (345), to initiate the roaming of the client responsive to one of the RSSI or signal to noise ratio falling below a threshold.

4. The method of any of claims 1 to 3, further comprising initiating the transfer by communicating one or more instructions to one or more of the clients, the first access point (310), or the second access point (310).

5. The method of any of claims 1 to 4, further comprising transferring, by the switch (305), packets being stored by the switch (305) at a first port buffer of a first port for the client associated with the first access point (310) to a second port buffer of a second port, of the switch (305) or a second switch (305), assigned to the second access point (310).

6. The method of any of claims 1 to 5, wherein the transfer of the connection includes transferring of the client's credentials.

7. The method of any of claims 1 to 6, further comprising adjusting, by the switch (305), traffic rates based at least on the telemetry information.

8. A system (100, 300) comprising:
a switch (305) in communication with a plurality of access points (310), each access point (310) of the plurality of access points (310) having connection to one or more clients,
a controller (345) of the switch (305) configured to:
receive feedback messages from each access point (310), of the plurality of access points (310), wherein each access point (310) is connected to a corresponding port of a plurality of ports of the switch (305), the feedback messages comprising telemetry information on each client of the one or more clients connected to each access point (310);
determine, based at least on the telemetry information, to initiate roaming of a client of the one or more clients from a first access point (310) of the plurality of access points (310) to a second access point (310) of the plurality of access points (310); and
initiate a transfer of the connection of the client with the first access point (310) to the second access point (310), the transfer including transferring of data stored on the first access point (310) for the client to the second access point (310).

9. The system (100, 300) of claim 8, wherein the telemetry data of the feedback messages comprises at least one of radio signal strength indicator (RSSI) or signal to noise ratio;
in particular wherein the controller (345) is further configured to initiate the roaming of the client responsive to one of the RSSI or signal to noise ratio falling below a threshold.

10. The system (100, 300) of claim 8 or 9, comprising at least one of the following features:
wherein the controller (345), is further configured to initiate the transfer by communicating one or more instructions to one or more of the clients, the first access point (310), or the second access point (310);
wherein the switch (305) is further configured to transfer packets being stored by the switch (305) at a first port buffer of a first port for the client associated with the first access point (310) to a second port buffer of a second port, of the switch (305) or a second switch (305), assigned to the second access point (310);
wherein the transfer of the connection includes transferring of the client's credentials.

11. The system (100, 300) of any of claims 8 to 10, wherein the controller (345), is further configured to adjust traffic rates based at least on the telemetry information.

12. A system (100, 300) comprising:
one or more switches (305) coupled to a network to communicate with a plurality of access points (310) and each of the plurality of access point (310)s associated with a plurality of clients, each of the one or more switches (305) comprising:
a plurality of ports, each port of the plurality of ports connected to an access point (310) of the plurality of access points (310), each port of the plurality of ports comprising a port scheduler (330) to aggregate packets received by the switch (305) from the network for the plurality of clients associated with the access point (310); and
a client scheduler (335) for each client of the plurality of clients associated with the access point (310) of each port, each client scheduler (335) to schedule the packets aggregated by the port scheduler (330) for a client of the plurality of clients of the access point (310) based at least on one or more priority levels; and
wherein each client scheduler (335) is configured to adjust a rate of transmission of scheduled packets to the client of the plurality of clients based at least on the one or more priority levels and telemetry data from one or more feedback messages received from the access point (310).

13. The system (100, 300) of claim 12, comprising at least one of the following features:
wherein each port scheduler (330) is further configured to select each client scheduler (335) based at least on a selection from one or more scheduling algorithms;
wherein the one or more switches (305) are further configured to store aggregated packets in a packet buffer memory and wherein each client scheduler (335) stores one or more scheduled packets from the packet buffer memory in a priority queue for storing packets with a priority level of the one or more priority levels;
wherein the one or more switches (305) are further configured to receive the one or more feedback messages from each access point (310) the switch (305) is connected to, wherein the one or more telemetry data of the one or more feedback messages comprises at least one of radio signal strength indicator (RSSI) or signal to noise ratio.

14. The system (100, 300) of claim 12 or 13, comprising at least one of the following features:
wherein the one or more feedback messages identify the client using a machine access control, MAC, address of the client and identify the MAC address of the access point (310) as a source address and the MAC address of a switch (305) of the one or more switches (305) as a destination address;
wherein the switch (305) is further configured via one of the port scheduler (330) or the client scheduler (335) to reduce the rate of transmission of scheduled packets to the client responsive to one of the radio signal strength indicator or signal to noise ratio of the client's connection to the access point (310) falling below a threshold;
wherein the switch (305) is further configured via one of the port scheduler (330) or the client scheduler (335) to prioritize packets of one or more clients having a radio signal strength indicator or signal to noise ratio with the access point (310) above a threshold.

15. The system (100, 300) of any of claims 12 to 14, wherein a switch (305) of the one or more switches (305) is further configured to, responsive to the client switching from the access point (310) to a second access point (310) connected to one of the switch (305) or a second switch (305) of the one or more switches (305) at a second port, transfer packets in one or more queues of the client to one or more second queues of a second client scheduler (335) for the second access point (310) connected to the second port.
